(19)

Europäisches Patentamt

European Patent Office

Office européen des brevets

(11) **EP 4 209 968 A1**

(12) **EUROPEAN PATENT APPLICATION**

(43) Date of publication:
**12.07.2023 Bulletin 2023/28**

(21) Application number: **22208966.6**

(22) Date of filing: **23.11.2022**

(51) International Patent Classification (IPC):
**G06N 3/0455** (2023.01)   **G06N 3/047** (2023.01)
**G06N 3/0475** (2023.01)   **G06N 3/09** (2023.01)
**G06N 3/088** (2023.01)

(52) Cooperative Patent Classification (CPC):
**G06N 3/0475; G06N 3/0455; G06N 3/047;
G06N 3/088; G06N 3/09**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **05.01.2022 IN 202221000662**

(71) Applicant: **Tata Consultancy Services Limited
Maharashtra (IN)**

(72) Inventors:
• **SAKHINANA, Sagar Srinivas
411013 Pune, Maharashtra (IN)**
• **RUNKANA, Venkataramana
411013 Pune, Maharashtra (IN)**
• **SARKAR, Rajat Kumar
560066 Bangalore, Karnataka (IN)**

(74) Representative: **Goddar, Heinz J. et al
Boehmert & Boehmert
Anwaltspartnerschaft mbB
Pettenkoferstrasse 22
80336 München (DE)**

(54) **SYSTEM AND METHOD FOR GENERATING MIXED VARIABLE TYPE MULTIVARIATE TEMPORAL SYNTHETIC DATA**

(57) Health monitoring of complex industrial assets remains the most critical task for avoiding downtimes, improving system reliability, safety and maximizing utilization. Recent advances in time-series synthetic data generation have several inherent limitations for realistic applications. A method and system have been provided for generating mixed variable type multivariate temporal synthetic data. The system provides a framework for condition and constraint knowledge-driven synthetic data generation of real-world industrial mixed-data type multivariate time-series data. The framework consists of a generative time-series model, which is trained adversarially and jointly through a learned latent embedding space with both supervised and unsupervised losses. The system addresses the key desideratum in diverse time dependent data fields where data availability, data accuracy, precision, timeliness, and completeness are of prior importance in improving the performance of the deep learning models.

FIG. 1

EP 4 209 968 A1

**Description**

CROSS-REFERENCE TO RELATED APPLICATIONS AND PRIORITY

The present application claims priority to Indian application no. 202221000662, filed on 05 January 2022.

TECHNICAL FIELD

The disclosure herein generally relates to the field of synthetic data generation, and, more particularly, to a method and system for generating mixed variable type multivariate temporal synthetic data.

BACKGROUND

Health monitoring of complex industrial assets remains the most critical task for avoiding downtimes, improving system reliability, safety and maximize utilization. The industrial assets rely on large amount of data for functioning and operation. There is a rising emphasis in the industry to leverage ad hoc artificial intelligence (AI) driven technology landscape for various activities. One of the activity is designing and operating the process twins of various industrial assets. Deep learning algorithms in the recent times have been extensively leveraged in modeling complex phenomena in diverse time dependent data fields but not limited to financial, medical, weather, process-plants for classification, anomaly detection challenge, etc. Data abundance and quality of the data substantially impedes performance of deep learning models.

Deep learning-driven generative models encapsulate the operational behavior from adversarial losses through adversarial training of complex large-scale industrial-plants or asset multivariate time series data. The generative information helps to study the industrial plant performance, and life-cycle operation conditions of industrial assets to aid in prognostics, optimization, and predictive maintenance.

Recent works in time-series synthetic data generation include but have several inherent limitations for realistic applications. The existing tools for multivariate data synthesis do not utilize a unified approach.

SUMMARY

Embodiments of the present disclosure present technological improvements as solutions to one or more of the above-mentioned technical problems recognized by the inventors in conventional systems. For example, in one embodiment, a system for generating mixed variable type multivariate temporal synthetic data is provided. The system comprises an input/output interface, one or more hardware processors and a memory. The memory is in communication with the one or more hardware processors, wherein the one or more first hardware processors are configured to execute programmed instructions stored in the one or more first memories, to: provide mixed variable type multivariate temporal real time data as an input data, wherein the mixed variable type comprises continuous variables and discrete variables; pre-process the input data by scaling to a fixed range for both the continuous variables and the discrete variables; split the pre-processed data into a training dataset, a validation dataset and a test dataset; train a joint neural network of an autoencoding-decoding component of a Constraint-Condition-Generative Adversarial Network (ccGAN), a supervisor neural network and a critic neural network utilizing the training dataset, wherein the autoencoding-decoding component comprises an embedding neural network and a recovery neural network, the training comprises: providing the training dataset as an input to the embedding neural network to generate high dimensional real latent temporal embeddings, providing the high dimensional real latent temporal embeddings as an input to the recovery neural network to get a reconstructed input training dataset, wherein the embedding and the recovery neural network is jointly trained using a supervised learning approach for reconstructing the training dataset, providing the high dimensional real latent temporal embeddings as an input to the supervisor neural network to generate a single-step-ahead high dimensional real latent temporal embeddings, wherein the supervisor neural network is trained using the supervised learning approach, and providing the high dimensional real latent temporal embeddings as an input to the critic neural network to predict a target variable, wherein the critic neural network is trained using the supervised learning approach; determine a cluster label dependent random noise by transforming Gaussian random noise with a fixed predetermined cluster labels, wherein the Gaussian random noise is part of the input data; compute a conditioned knowledge vector corresponding to a predetermined label value for each discrete variable; concatenate the cluster label dependent random noise with the conditioned knowledge vector to generate a condition aware synthetic noise; jointly train adversarial neural networks of the Constraint-Condition aware Generative Adversarial Network (ccGAN), a sequence generator neural network, a sequence discriminator neural network, the supervisor neural network and the critic neural network utilizing the condition aware synthetic noise, wherein the training comprises: providing the condition aware synthetic noise as an input to the sequence generator neural network to get high dimensional synthetic latent temporal embeddings, providing the high dimensional synthetic latent temporal embeddings to the trained supervisor neural network to predict single-step ahead synthetic temporal latent embeddings, providing the high dimensional synthetic latent temporal embeddings to the trained critic neural network to predict the synthetic target variable, and providing the predicted single-step ahead synthetic temporal latent embeddings as an input to the recovery neural network to generate the mixed variable type multivariate temporal synthetic data; provide the high dimensional real latent temporal embeddings and the high dimensional synthetic latent temporal embeddings as an input to the sequence discriminator neural network to classify them as one of a real or a fake, and predict the cluster labels for synthetic data; provide a real world condition aware synthetic noise as an input to the trained sequence generator neural network to get real world high dimensional synthetic latent temporal embeddings; provide the real world high dimensional synthetic latent temporal embeddings to the trained supervisor neural network to predict real world single-step ahead synthetic temporal latent embeddings; and provide the real world predicted single-step ahead synthetic temporal latent embeddings as an input to the trained recovery neural network to generate the mixed variable type multivariate temporal synthetic data.

In another aspect, a method for generating mixed variable type multivariate temporal synthetic data is provided. Initially, mixed variable type multivariate temporal real time data is provided as an input data, wherein the mixed variable type comprises continuous variables and discrete variables. Further, the input data is preprocessed by scaling to a fixed range for both the continuous variables and the discrete variables. In the next step, the pre-processed data is split into a training dataset, a validation dataset and a test dataset. The training dataset is then trained on a joint neural network of an autoencoding-decoding component of a Constraint-Condition-Generative Adversarial Network (ccGAN), a supervisor neural network and a critic neural network, wherein the autoencoding-decoding component comprises an embedding neural network and a recovery neural network. The training comprises: providing the training dataset as an input to the embedding neural network to generate high dimensional real latent temporal embeddings, providing the high dimensional real latent temporal embeddings as an input to the recovery neural network to get a reconstructed input training dataset, wherein the embedding and the recovery neural network is jointly trained using a supervised learning approach for reconstructing the training dataset, providing the high dimensional real latent temporal embeddings as an input to the supervisor neural network to generate a single-step-ahead high dimensional real latent temporal embeddings, wherein the supervisor neural network is trained using the supervised learning approach, and providing the high dimensional real latent temporal embeddings as an input to the critic neural network to predict a target variable, wherein the critic neural network is trained using the supervised learning approach. In the next step, a cluster label dependent random noise is determined by transforming Gaussian random noise with a fixed predetermined cluster labels, wherein the Gaussian random noise is part of the input data. Further, a conditioned knowledge vector is computed corresponding to a pre-determined label value for each discrete variable. In the next step, the cluster label dependent random noise is concatenated with the conditioned knowledge vector to generate a condition aware synthetic noise. Neural networks of the Constraint-Condition aware Generative Adversarial Network (ccGAN), a sequence generator neural network, a sequence discriminator neural network, the supervisor neural network and the critic neural network are then jointly trained utilizing the condition aware synthetic noise. The training comprises: providing the condition aware synthetic noise as an input to the sequence generator neural network to get high dimensional synthetic latent temporal embeddings, providing the high dimensional synthetic latent temporal embeddings to the trained supervisor neural network to predict single-step ahead synthetic temporal latent embeddings, providing the high dimensional synthetic latent temporal embeddings to the trained critic neural network to predict the synthetic target variable, and providing the predicted single-step ahead synthetic temporal latent embeddings as an input to the recovery neural network to generate the mixed variable type multivariate temporal synthetic data. Further, the high dimensional real latent temporal embeddings and the high dimensional synthetic latent temporal embeddings are provided as an input to the sequence discriminator neural network to classify them as one of a real or a fake, and predict the cluster labels for synthetic data. In the next step, a real world condition aware synthetic noise is provided as an input to the trained sequence generator neural network to get real world high dimensional synthetic latent temporal embeddings. Further, the real world high dimensional synthetic latent temporal embeddings are provided to the trained supervisor neural network to predict real world single-step ahead synthetic temporal latent embeddings. And finally, the real world predicted single-step ahead synthetic temporal latent embeddings are provided as an input to the trained recovery neural network to generate the mixed variable type multivariate temporal synthetic data.

In yet another aspect, one or more non-transitory machine-readable information storage mediums comprising one or more instructions which when executed by one or more hardware processors cause generating mixed variable type multivariate temporal synthetic data is provided. Initially, mixed variable type multivariate temporal real time data is provided as an input data, wherein the mixed variable type comprises continuous variables and discrete variables. Further, the input data is preprocessed by scaling to a fixed range for both the continuous variables and the discrete variables. In the next step, the pre-processed data is split into a training dataset, a validation dataset and a test dataset. The training dataset is then trained on a joint neural network of an autoencoding-decoding component of a Constraint-Condition-Generative Adversarial Network (ccGAN), a supervisor neural network and a critic neural network, wherein the autoencoding-decoding component comprises an embedding neural network and a recovery neural network. The training comprises: providing the training dataset as an input to the embedding neural network to generate high dimensional real latent temporal embeddings, providing the high dimensional real latent temporal embeddings as an input to the recovery neural network to get a reconstructed input training dataset, wherein the embedding and the recovery neural network is jointly trained using a supervised learning approach for reconstructing the training dataset, providing the high dimensional real latent temporal embeddings as an input to the supervisor neural network to generate a single-step-ahead high dimensional real latent temporal embeddings, wherein the supervisor neural network is trained using the supervised learning approach, and providing the high dimensional real latent temporal embeddings as an input to the critic neural network to predict a target variable, wherein the critic neural network is trained using the supervised learning approach. In the next step, a cluster label dependent random noise is determined by transforming Gaussian random noise with a fixed predetermined cluster labels, wherein the Gaussian random noise is part of the input data. Further, a conditioned knowledge vector is computed corresponding to a pre-determined label value for each discrete variable. In the next step, the cluster label dependent random noise is concatenated with the conditioned knowledge vector to generate a condition aware synthetic noise. Neural networks of the Constraint-Condition aware Generative Adversarial Network (ccGAN), a sequence generator neural network, a sequence discriminator neural network, the supervisor neural network and the critic neural network are then jointly trained utilizing the condition aware synthetic noise. The training comprises: providing the condition aware synthetic noise as an input to the sequence generator neural network to get high dimensional synthetic latent temporal embeddings, providing the high dimensional synthetic latent temporal embeddings to the trained supervisor neural network to predict single-step ahead synthetic temporal latent embeddings, providing the high dimensional synthetic latent temporal embeddings to the trained critic neural network to predict the synthetic target variable, and providing the predicted single-step ahead synthetic temporal latent embeddings as an input to the recovery neural network to generate the mixed variable type multivariate temporal synthetic data. Further, the high dimensional real latent temporal embeddings and the high dimensional synthetic latent temporal embeddings are provided as an input to the sequence discriminator neural network to classify them as one of a real or a fake and predict the cluster labels for synthetic data. In the next step, a real world condition aware synthetic noise is provided as an input to the trained sequence generator neural network to get real world high dimensional synthetic latent temporal embeddings. Further, the real world high dimensional synthetic latent temporal embeddings are provided to the trained supervisor neural network to predict real world single-step ahead synthetic temporal latent embeddings. And finally, the real world predicted single-step ahead synthetic temporal latent embeddings are provided as an input to the trained recovery neural network to generate the mixed variable type multivariate temporal synthetic data.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 illustrates a block diagram of a system for generating mixed variable type multivariate temporal synthetic data according to some embodiments of the present disclosure.

FIG. 2A through FIG. 2C is a flowchart illustrating steps involved in generating mixed variable type multivariate temporal synthetic data according to some embodiments of the present disclosure.

FIG. 3 is a block diagram of an embedding and recovery module according to some embodiments of the present disclosure.

FIG. 4 is a block diagram showing unsupervised learning of the generator neural network, the supervisor neural network and the recovery neural network according to some embodiments of the present disclosure.

FIG. 5 is a block diagram of a generator module according to some embodiments of the present disclosure.

FIG. 6 is a block diagram of a discriminator module according to some embodiments of the present disclosure.

FIG. 7 is a block diagram of a critic module according to some embodiments of the present disclosure.

FIG. 8 is a block diagram of a supervisor module according to some embodiments of the present disclosure.

FIG. 9 is a block diagram showing training of the joint network in supervised-learning approach according to some embodiments of the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Health monitoring of complex industrial assets remains the most critical task for avoiding downtimes, improving system reliability, safety and maximizing utilization. Deep learning-driven generative models encapsulate the operational behavior from adversarial losses through adversarial training of the complex large-scale industrial-plant or asset multivariate time series data. Recent advances in time-series synthetic data generation have several inherent limitations for realistic applications. The existing solutions do not provide a unified approach and do not generate the realistic data which can be used in the industrial processes. Further, the existing solution is not able to incorporate condition and constraint prior knowledge while sampling the synthetic data.

The present disclosure provides a method and system for generating mixed variable type multivariate temporal synthetic data. The system provides a framework for condition and constraint knowledge-driven synthetic data generation of real-world industrial mixed-data type multivariate time-series data. The framework consists of a generative time-series model, which is trained adversarially (the adversarial loss is described by a continuously trained generative network player to generate samples that have a low probability of being unrealistic in contrast to the discriminator loss, as determined by the discriminator player which is trained to classify both the true data and the synthetic data from the generator player) and jointly through a learned latent embedding space with both supervised and unsupervised losses. The key challenges are encapsulating the distributions of mixed-data types variables and correlations within each timestamp as well as the temporal dependencies of those variables across time frames.

The present disclosure addresses the key desideratum in diverse time dependent data fields where data availability, data accuracy, precision, timeliness, and completeness are of prior importance in improving the performance of the deep learning models.

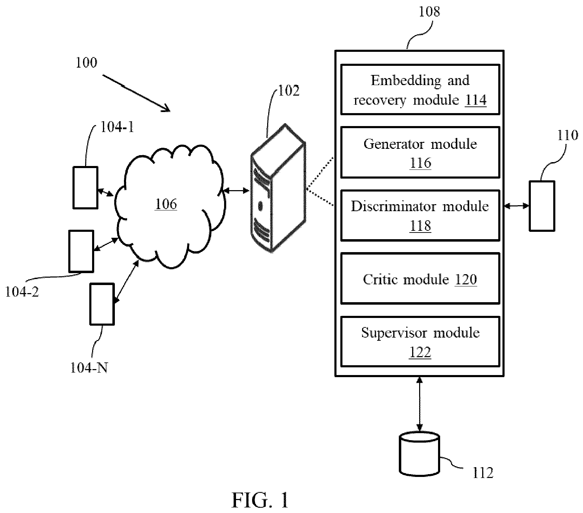

Referring now to the drawings, and more particularly to FIG. 1 through FIG. 9, where similar reference characters denote corresponding features consistently throughout the figures, there are shown preferred embodiments and these embodiments are described in the context of the following exemplary system and/or method.

According to an embodiment of the disclosure, FIG. 1 illustrates a block diagram of a system 100 for generating mixed variable type multivariate temporal synthetic data. The system 100 comprises a generative model through an adversarial training process between generator and discriminator network player is a unified algorithmic approach from autoregressive models for sequence prediction, Generative Adversarial Networks (GAN) based methods for sequence generation, and for time-series representation learning.

It may be understood that the system 100 comprises one or more computing devices 102, such as a laptop computer, a desktop computer, a notebook, a workstation, a cloud-based computing environment and the like. It will be understood that the system 100 may be accessed through one or more input/output interfaces 104, collectively referred to as I/O interface 104 or user interface 104. Examples of the I/O interface 104 may include, but are not limited to, a user interface, a portable computer, a personal digital assistant, a handheld device, a smartphone, a tablet computer, a workstation and the like. The I/O interface 104 are communicatively coupled to the system 100 through a network 106.

In an embodiment, the network 106 may be a wireless or a wired network, or a combination thereof. In an example, the network 106 can be implemented as a computer network, as one of the different types of networks, such as virtual private network (VPN), intranet, local area network (LAN), wide area network (WAN), the internet, and such. The network 106 may either be a dedicated network or a shared network, which represents an association of the different types of networks that use a variety of protocols, for example, Hypertext Transfer Protocol (HTTP), Transmission Control Protocol/Internet Protocol (TCP/IP), and Wireless Application Protocol (WAP), to communicate with each other. Further, the network 106 may include a variety of network devices, including routers, bridges, servers, computing devices, storage devices. The network devices within the network 106 may interact with the system 100 through communication links.

The system 100 may be implemented in a workstation, a mainframe computer, a server, and a network server. In an embodiment, the computing device 102 further comprises one or more hardware processors 108, one or more memory 110, hereinafter referred as a memory 110 and a data repository 112, for example, a repository 112. The memory 110 is in communication with the one or more hardware processors 108, wherein the one or more hardware processors 108 are configured to execute programmed instructions stored in the memory 110, to perform various functions as explained in the later part of the disclosure. The repository 112 may store data processed, received, and generated by the system 100. The memory 110 further comprises a plurality of modules for performing various functions. The plurality of modules comprises an embedding and recovery module 114, a generator module 116, a discriminator module 118, a critic module 120, and a supervisor module 122.

The system 100 supports various connectivity options such as BLUETOOTH®, USB, ZigBee and other cellular services. The network environment enables connection of various components of the system 100 using any communication link including Internet, WAN, MAN, and so on. In an exemplary embodiment, the system 100 is implemented to operate as a stand-alone device. In another embodiment, the system 100 may be implemented to work as a loosely coupled device to a smart computing environment. The components and functionalities of the system 100 are described further in detail.

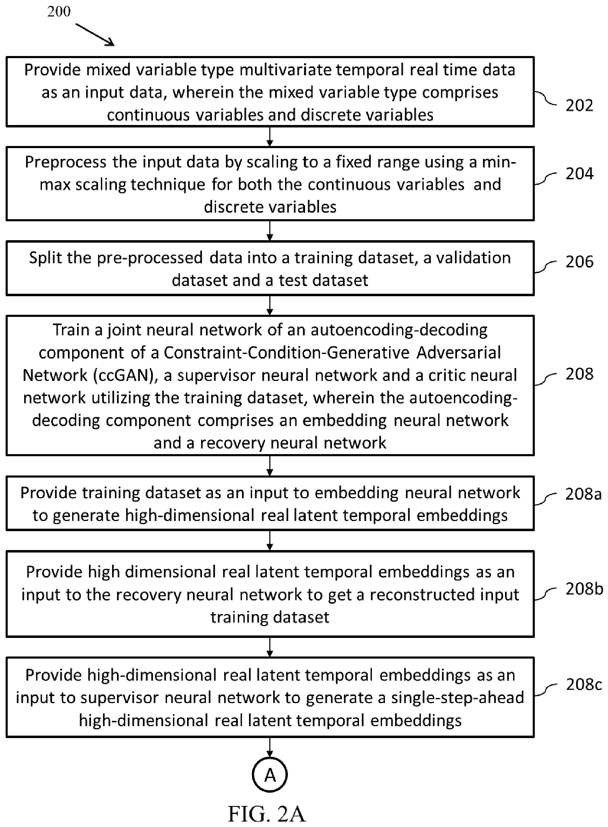

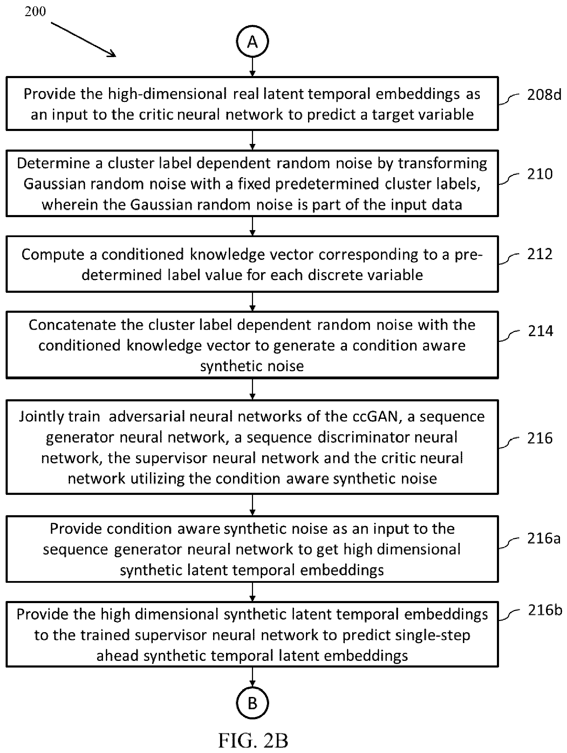

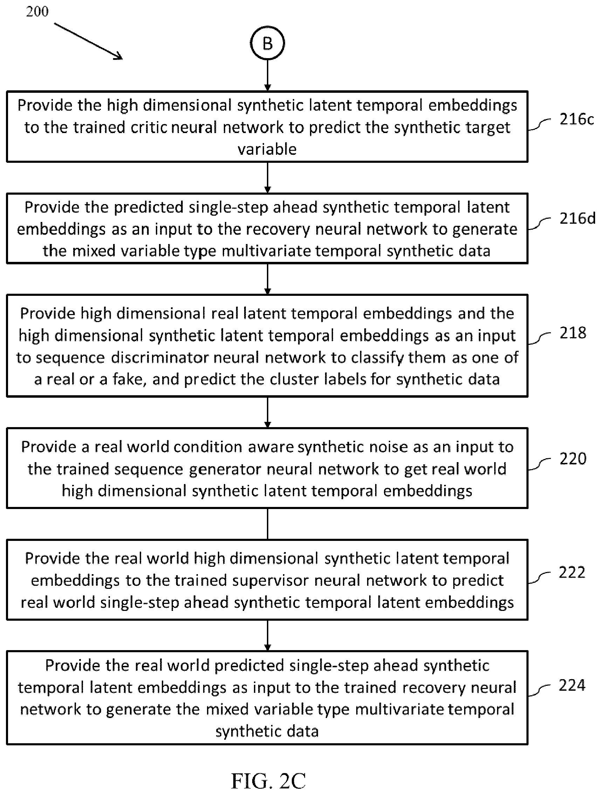

FIG. 2A through 2C illustrates an example flow chart of a method 200 for analyzing a plurality of data streams in real time, in accordance with an example embodiment of the present disclosure. The method 200 depicted in the flow chart may be executed by a system, for example, the system 100 of FIG. 1. In an example embodiment, the system 100 may be embodied in the computing device.

Operations of the flowchart, and combinations of operations in the flowchart, may be implemented by various means, such as hardware, firmware, processor, circuitry and/or other device associated with execution of software including one or more computer program instructions. For example, one or more of the procedures described in various embodiments may be embodied by computer program instructions. In an example embodiment, the computer program instructions, which embody the procedures, described in various embodiments may be stored by at least one memory device of a system and executed by at least one processor in the system. Any such computer program instructions may be loaded onto a computer or other programmable system (for example, hardware) to produce a machine, such that the resulting computer or other programmable system embody means for implementing the operations specified in the flowchart. It will be noted herein that the operations of the method 200 are described with help of system 100. However, the operations of the method 200 can be described and/or practiced by using any other system.

Initially at step 202 of the method 200, mixed variable type multivariate temporal real time data is provided as an input data. The mixed variable type comprises continuous variables and discrete variables.

Further at step 204, the input data is preprocessed by scaling to a fixed range for both the continuous variables and the discrete variables. The data pre-processing involves encoding the continuous independent & dependent feature variables by scaling to the fixed-range, [0; 1] by applying the min-max scaling technique. The discrete categorical featre attributes are represented as binary vectors through the one-hot encoding technique. At step 206, the pre-processed data is split into a training dataset, a validation dataset and a test dataset. The training dataset is used to train multiple neural networks. The validation dataset is used to tune a set of hyperparameters.

Further at step 208 of the method 200, a joint neural network of an autoencoding-decoding component of a Constraint-Condition-Generative Adversarial Network (ccGAN), a supervisor neural network and a critic neural network is trained utilizing the training dataset. The autoencoding-decoding component comprises an embedding neural network and a recovery neural network. The training comprises the learning of optimum learnable parameters of the embedding neural network, the recovery neural network, the supervisor neural network and the critic neural network.

At step 208a, the training dataset is provided as an input to the embedding neural network to generate high dimensional real latent temporal embeddings. At step 208b, the high dimensional real latent temporal embeddings are provided as an input to the recovery neural network to get a reconstructed input training dataset. The embedding and the recovery neural network are jointly trained using a supervised learning approach for reconstructing the training dataset. At step 208c, the high dimensional real latent temporal embeddings are provided as an input to the supervisor neural network to generate a single-step-ahead high dimensional real latent temporal embeddings. The supervisor neural network is trained using the supervised learning approach. And at step 208d, the high dimensional real latent temporal embeddings are provided as an input to the critic neural network to predict a target variable. The critic neural network is trained using the supervised learning approach.

Further at step 210 of the method 200, a cluster label dependent random noise is determined by transforming Gaussian random noise with fixed predetermined cluster labels, wherein the Gaussian random noise is part of the input data. At step 212, a conditioned knowledge vector is computed corresponding to a pre-determined label value for each discrete variable. At step 214 the cluster label dependent random noise is concatenated with the conditioned knowledge vector to generate a condition aware synthetic noise.

Further at step 216 of the method 200, following neural networks of the Constraint-Condition aware Generative Adversarial Network (ccGAN), a sequence generator neural network, a sequence discriminator neural network, the supervisor neural network and the critic neural network are jointly trained utilizing the condition aware synthetic noise. The training comprises: initially at step 216a, the condition aware synthetic noise is provided as an input to the sequence generator neural network to get high dimensional synthetic latent temporal embeddings. At step 216b, the high dimensional synthetic latent temporal embeddings are provided to the trained supervisor neural network to predict single-step ahead synthetic temporal latent embeddings. At step 216c, the high dimensional synthetic latent temporal embeddings are provided to the trained critic neural network to predict the synthetic target variable. And at step 216d, the predicted single-step ahead synthetic temporal latent embeddings are provided as an input to the recovery neural network to generate the mixed variable type multivariate temporal synthetic data.

Further, at step 218 of the method 200, the high dimensional real latent temporal embeddings and the high dimensional synthetic latent temporal embeddings are provided as an input to the sequence discriminator neural network to classify them as one of a real or a fake and predict the cluster labels for synthetic data. It should be appreciated that the validation dataset is utilized as an input to the trained ccGAN to tune a set of hyperparameters.

Further at step 220 of the method 200, real world condition aware synthetic noise is provided as an input to the trained sequence generator neural network to get real world high dimensional synthetic latent temporal embeddings. At step 222, real world high dimensional synthetic latent temporal embeddings are provided to the trained supervisor neural network to predict real world single-step ahead synthetic temporal latent embeddings. And finally, at step 224, the real world predicted single-step ahead synthetic temporal latent embeddings are provided as an input to the trained recovery neural network to generate the mixed variable type multivariate temporal synthetic data.

According to an embodiment of the disclosure, the system 100 can be explained with the help of a problem-solution approach. To formulate the problem, it is considered that the mixed-feature f-dimensional time series dataset, D is observed over $T_n \times 2N$ timepoints. D is described by $(D_{(1)}, D_{(2)}, ..., D_{(T_n \times 2N)})$ and observed in timepoints, $t \in \{1, 2, ..., T_n \times 2N\}$. The observations of the f-stochastic variables at $t$ - th timepoint is given by

$$D_t = (D_t^{(1)}, ..., D_t^{(f)}) \in \mathbb{D}^{(f)}. D_t^{(j)}$$

, $\forall j \in \{1, 2, ..., f\}$ denotes the observation value of j-th feature-variable of $D_t$.

The observed dataset, D comprises of c-continuous random variables, $\{1, ..., c\} \subset f$ and d-categorical stochastic variables, $\{(c + 1), ..., d\} \subset f$. $f(=c=d)$ denotes the total number of feature variables in the real dataset, D. The mixed-feature f-dimensional space is denoted by $\mathbb{D}$. $\mathbb{D}$ is given by, $\Pi_{j=1}^{f} \mathbb{D}_{(j)}$. In general, the synthetic data generative neural network function, $\mathcal{G}_n$ is learned by modeling the mixed-feature multivariate time series data, D joint distribution, P(D(l:c;c+1:d)) to generate synthetic data, $\tilde{D}$ which is modeled by $\hat{\mathbb{P}}(\tilde{D}^{(1:c,c+1:d)})$. $\tilde{D}$ is determined by solving a two machine players, mini-max optimization schema through adversarial training in a competitive game setting. It is expressed as below,

$$\min_{\mathcal{G}_n} \max_{\mathcal{D}_n} [\mathbb{E}_{\mathcal{D} \sim \mathbb{P}}[\log \mathcal{D}_n(\mathcal{D})] + \mathbb{E}_{\tilde{\mathcal{D}} \sim \hat{\mathbb{P}}}[\log(1 - \mathcal{D}_n(\tilde{\mathcal{D}}))]] \ldots\ldots\ldots [1]$$

$\mathcal{D}_n$ denotes the sequence discriminator neural network. After training $fi_n$ on D. $\tilde{D}$ is determined independently by sampling sequences using $\mathcal{G}_n$. The drawbacks of the traditional synthetic data generative algorithms solved through, refer equation[1]. The drawbacks include to retain the joint distributions of handling mixedfeature type real data, temporal dynamics of the real data, preserve the relationship between the independent feature variables and the target variable in the real data and incorporate a condition and constraint prior knowledge for sampling synthetic data. The sampled, $\tilde{D}$ suffer from lack-luster utility for application in downstream tasks. In the present disclosure, ccGAN algorithmic architecture by operating on rearranged multivariate mixed-feature dataset, $\mathcal{D}_{n,1:T_n}$ the short-comings are adressed by incorporating the condition and constraint knowledge into the generative algorithm and preseve the characteristics of the observed mixedfeature data in the synthetic data. The observed dataset, D is rearranged as,

$$\mathcal{D}_{n,1:T_n}, \forall n \in \{1, ..., 2N\} \ldots\ldots\ldots\ldots [2]$$

The cardinality of the real dataset, $\mathcal{D}_{n,1:T_n} \in \mathbb{R}^{T_n \times f}$, $\forall n \in \{1, ..., 2N\}$ is 2N. Lets consider for $n = 1$, $\mathcal{D}_{1,1:T_1} \in \mathbb{D}^{T_1 \times f}$. $T_1$ denotes the finite length of the sequence, n = 1. $\mathcal{J}_{1,1:T_1}$ consists of observations of $D_t$ at time points, $t \in \{1, 2, ..., T_1\}$. In the same way for the sequence, $n = 2$. $\mathcal{J}_{2,1:T_2} \in \mathbb{D}^{T_2 \times f}$ is an array of arrays, which consists of observations of $D_t$ at time points, $t \in \{(T_1 + 1), ..., (T_1 + T_2)\}$. The finitelength, $T_n$ of each sequence, $\forall n \in \{1, ..., 2N\}$ is a stochastic variable. $T_n$ is constant value across the sequences, $\forall n \in \{1, ..., 2N\}$. It is a hyper-parameter of the hybridlearning algorithm. $\mathcal{D}_{n,1:T_n}$ be the continuous observed multivariate time series of length, $T_n$ of the mixed-feature variables, f for a given sequence, n. $\mathcal{D}_{n,t} = \{\mathcal{D}_{n,t}^{(1)}, \mathcal{D}_{n,t}^{(2)}, ..., \mathcal{D}_{n,t}^{(f)}\}$. $\mathcal{D}_{n,t} \in \mathbb{D}^{(f)}$ is the n-th data sequence observation values of the feature variables, f at the t-th time point, $t \in 1:T_n$. $\mathcal{D}_{n,t}^{(j)} \in \mathbb{D}_{(j)}$, $t \in 1:T_n$ denotes the observed

value of the $j$-th feature variable in $\mathcal{D}_{n,t} \in \mathbb{D}^{(f)}$. The real dataset, $\mathcal{D}_{n,1:T_n}$ of cardinality 2N is split into training data set, $\mathcal{D}\text{train}_{n,1:T_n}$, and test data set, $\mathcal{D}\text{test}_{n,1:T_n}$ of cardinality N respectively without random shuffling of $\mathcal{D}_{n,1:T_n}$. $\mathcal{D}\text{train}_{n,1:T_n}$ is modeled with an unknown joint distribution, $\mathbb{P}(\mathcal{D}^{(1:c,c+1:d)}_{\text{train}_{n,1:T_n}})$. The synthetic dataset generated by the ccGAN neural-network architecture is denoted by $\widetilde{\mathcal{D}}_{n,1:T_n}$, $\forall\, n \in \{1, ..., N\}$. The size of $\widetilde{\mathcal{D}}_{n,1:T_n}$ is N. Lets say, $\widetilde{\mathcal{D}}_{n,1:T_n}$ is modeled by distribution, $\widehat{\mathbb{P}}(\widetilde{\mathcal{D}}^{(1:c,c+1:d)}_{n,1:T_n})$. In the present disclosure, mixed-feature training data, $\mathcal{D}\text{train}_{n,1:T_n}$ learn a density $\widehat{\mathbb{P}}\left(\widetilde{\mathcal{D}}^{(1:c,c+1:d)}_{n,1:T_n}\right)$ that best approximates $\mathbb{P}(\mathcal{D}^{(1:c,c+1:d)}_{\text{train}_{n,1:T_n}})$. It is mathematically described as by minimizing the weighted sum of the Kullback-Leibler(KL) divergence and the Wasserstein distance function(R) of order-1 defined between the original data observations, $\mathcal{D}\text{train}_{n,1:T_n}$ and the synthetic data, $\widetilde{\mathcal{D}}_{n,1:T_n}$ continuous probability distributions. The mathematical description is as follows,

$$\min_{\widehat{\mathbb{P}}}\mathcal{KL}(\mathbb{P}(\mathcal{D}^{(1:c,c+1:d)}_{\text{train}_{n,t}}) \parallel \widehat{\mathbb{P}}(\widetilde{\mathcal{D}}^{(1:c,c+1:d)}_{n,t})) + \gamma\mathcal{W}(\mathbb{P}(\mathcal{D}^{(c_1:c_c,d_1:d_d)}_{\text{train}_{n,t}}) \parallel$$

$$\widehat{\mathbb{P}}(\widetilde{\mathcal{D}}^{(1:c,c+1:d)}_{n,t}) \ldots\ldots\ldots [3]$$

In modeling mixed-data type multivariate temporal data, for convenience n = 1, $\mathcal{D}_{1,1:T_1} = (\mathcal{D}_1, ..., \mathcal{D}_{T_1}) \in \mathbb{D}^{T_1 \times f}$. The intent is to precisely represent the conditional distribution $\mathbb{P}(\mathcal{D}_{1,t}|\mathcal{D}_{1,1:t-1})$, $t \in 1: T_1$ in the synthetic data generated. The desideratum of the disclosed framework is also to preserve the temporal dynamics of real data. It is obtained by matching the conditionals and the mathematical description is as follows,

$$\min_{\widehat{\mathbb{P}}}\mathcal{KL}(\mathbb{P}(\mathcal{D}^{(1:c,c+1:d)}_{\text{train}_{n,t}}|\mathcal{D}^{(1:c,c+1:d)}_{\text{train}_{n,1:t-1}}) \parallel \widehat{\mathbb{P}}(\widetilde{\mathcal{D}}^{(1:c,c+1:d)}_{n,t}|\widetilde{\mathcal{D}}^{(1:c,c+1:d)}_{n,1:t-1})) +$$

$$\gamma\mathcal{W}(\mathbb{P}(\mathcal{D}^{(1:c,c+1:d)}_{\text{train}_{n,t}}|\mathcal{D}^{(1:c,c+1:d)}_{\text{train}_{n,1:t-1}}) \parallel \widehat{\mathbb{P}}(\widetilde{\mathcal{D}}^{(1:c,c+1:d)}_{n,t}|\widetilde{\mathcal{D}}^{(1:c,c+1:d)}_{n,1:t-1})), t \in 1: T_n \ldots[4]$$

The synthetic data generative neural network architecture should also preserve the relationship between the independent feature variables, $f_c \in f$ and target variable, $f_T \in f$ of the temporal real data and it is described by,

$$\min_{\widehat{\mathbb{P}}}\mathcal{KL}\left(\mathbb{P}\left(\mathcal{D}^{f_T}_{\text{train}_{n,t}}\middle|\mathcal{D}^{f_c}_{\text{train}_{n,t}}\right) \parallel \widehat{\mathbb{P}}(\widetilde{\mathcal{D}}^{f_T}_{n,t}|\widetilde{\mathcal{D}}^{f_c}_{n,t})\right) + \gamma\mathcal{W}\left(\mathbb{P}\left(\mathcal{D}^{f_T}_{\text{train}_{n,t}}\middle|\mathcal{D}^{f_c}_{\text{train}_{n,t}}\right) \parallel$$

$$\widehat{\mathbb{P}}(\widetilde{\mathcal{D}}^{f_T}_{n,t}|\widetilde{\mathcal{D}}^{f_c}_{n,t})\right], t \in 1: T_n \ldots\ldots\ldots [5]$$

According to an embodiment of the disclosure Constraint-Conditional Generative Adversarial Network (ccGAN) comprises following neural network modules or neural networks, embedding neural network, recovery neural network, sequence generator neural network, critic neural network, and a sequence discriminator neura network as mentinoed above.

According to an embodiment of the disclosure, an embedding and recovery module is configured to train the embedding neural network and the recovery neural network. The embedding module performs feature embedding by mapping the low dimensional temporal sequences to their corresponding high dimensional latent variables,

$$\mathcal{E}_{\text{ccGAN}}:\mathcal{D}\text{train}_{n,1:T_n} \in \prod_t \prod_{j=1}^{f} \mathbb{D}_{(j)} \to H\text{train}_{n,1:T_n} \in \prod_t \prod_{j=1}^{f} \mathbb{H}_{(j)}, \forall\, n \in \{1, ..., N\}. \mathbb{D}_{(j)}, \mathbb{H}_{(j)},$$

denotes the real j-th variable feature space & the realj-th variable latent embedding space. Refer to the algorithm [1] for the computation of the high dimensional latent variables from the low-dimensional feature representations. $S$, $S_m$ denote the sigmoid & softmax activation-function respectively. $\vec{e}_{mn}$ is an autoregressive neural-net model. It is realized with an unidirectional recurrent neural network with extended memory. $e_f$ is parameterized by a feed-forward neural network. The recovery function transforms the high dimensional temporal latent variables to their corresponding low-level feature representations, $\mathcal{R}_{ccGAN}: H^*_{n,1:T_n} \rightarrow \mathcal{D}^*_{n,1:T_n}, \mathcal{M}^*_{n,1:T_n}$. $\mathcal{M}^*_{n,1:T_n}$ is the binary-valued sparse dataset. The superscript, * denotes for real variables, $\mathcal{D}_{train_{n,1:T_n}}, H_{train_{n,1:T_n}}, \widetilde{\mathcal{M}}_{train_{n,1:T_n}}$, or for synthetic variables, $\widetilde{\mathcal{D}}_{n,1:T_n}, \widehat{H}_{train_{n,1:T_n}}, \widetilde{\mathcal{M}}_{n,1:T_n}$, respectively. $H^*_{n,1:T_n} \in \prod_t \prod_{j=1}^f \mathbb{H}_j$, $\mathcal{D}^*_{n,1:T_n} \in \prod_t \prod_{j=1}^f \mathbb{D}_j$ and $\mathcal{M}^*_{n,1:T_n} \in \{0,1\}^{[T_n, f_{\mathcal{M}}]}$. $f_{\mathcal{M}} = \sum_{j=1}^f |l_j|$. Refer to the algorithm [2] for the computation of the low-dimensional feature representations from the high dimensional latent variables. $\vec{r}_{mn}$ is an autoregressive, casual-ordering driven neural-net model. It is realized with an unidirectional recurrent neural network with extended memory. $r_f^c$ and $r_f^d$ are implemented by a feed-forward neural networks. (E) denotes the concatenation operator

---

**Algorithm 1** Embedding Module

**Require:** $\mathcal{D}_{train\,n,1:T_n}$, the mixed-type real data

1: **repeat**
2:     **for each** $t \in 1:T_n$ **do**
3:         $\vec{e}_{n,t} = \vec{e}_{rnn}(\mathcal{D}_{train\,n,t}, \vec{e}_{n,t-1})$
4:         $H_{train\,n,t} = \mathbf{S}(e_f(\vec{e}_{n,t}))$
5:     **end for**
6: **until** $n \leq N, \forall n \in \{1,\ldots,\mathbf{N}\}$
7: **Output:** real embeddings, $H_{train\,n,1:T_n}, \forall n \in \{1,\ldots,\mathbf{N}\}$

---

The intermediate layers of the recovery module applies a sigmoid function, S and the softmax function, $S_m$ to output values for continuous feature variables and for the discrete feature variables respectively. Please refer to steps-4,-5 of the algorithm [2]. The d-categorical feature variables were transformed, $\{(c + 1), ..., d\} \subset f$ to a set of one-hot numeric arrays. Please refer to step-7 of the algorithm [2].

$$\{\tilde{\mathbf{v}}^{(1)}, ..., \tilde{\mathbf{v}}^{(d)}\} \ldots\ldots\ldots [6]$$

Assume, $l_j$ represents the set of discrete labels associated with the j-th categorical feature variable, $j \in \{(c + 1), ... , d\} \subset f$. $|l_j|$ denotes the size of the set, $l_j$. $\tilde{v}^{(j)}$ is described by:

$$\{\tilde{\mathbf{v}}^{(j)} \in \{0,1\}^{|l_j|} : \sum_{i=1}^{|l_j|} \tilde{\mathbf{v}}_i^{(j)} = 1\}, \forall j \in f \ldots.. [7]$$

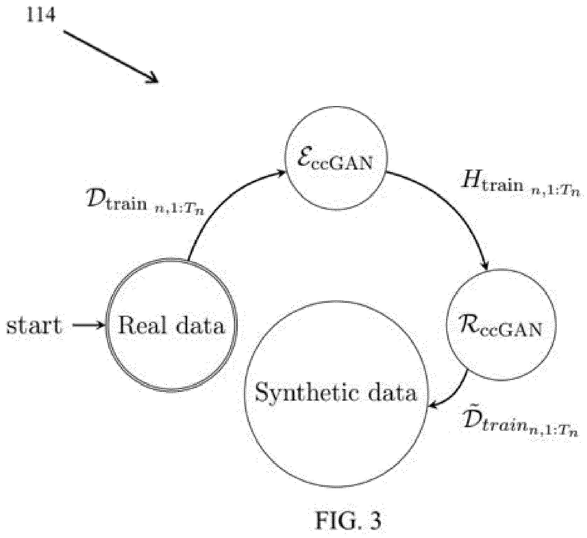

$\tilde{v}^{(j)}$ denotes the one-hot vector corresponding to j-th categorical feature variable. $\tilde{\mathbf{v}}_i^{(j)}$ is the scalar value of $\tilde{v}^{(j)}$. $\tilde{\mathbf{v}}_i^{(j)}$ i takes the value of 1, when $i = \text{argmax}_i[l_j^{(i)} = k], k \in l_j$ condition is satisfied and the rest is filled with zeros. $l_j^{(i)}$ denotes the i-th element of the set, $l_j$. The one-hot vector of the discrete feature variable, $j \in \{(c +$ 1), ..., $d\}$ at each timepoint, t is concatenated to obtain the sparsevector, $\mathcal{M}_{n,t}$ for a data sequence, $n, \forall n \in \{1, ..., N\}$ refer to step-8 of the algorithm [2]. The objective of the embedding and recovery modules are to minimize the discrepancy between the input mixed-feature real data, $\mathcal{D}\text{train}_{n,1:T_n}$ and the reconstructed data, $\widetilde{\mathcal{D}}\text{train}_{n,1:T_n}$ from its corresponding high dimensional latent representations, $\text{H}\text{train}_{n,1:T_n}$ as shown in FIG. 3. It is realized by joint training of the embedding and recovery modules through by minimizing supervised loss as described below,

$$\mathcal{L}_R = \sum_{n=1}^N \| \mathcal{D}\text{train}_{n,1:T_n} - \widetilde{\mathcal{D}}\text{train}_{n,1:T_n} \|_2 \ldots [8]$$

The cross-entropy loss in binary classification for predicting the input sparse one-hot encoded matrix is described below,

$$\mathcal{L}_M = -\frac{1}{N}\sum_{n=1}^N (\mathcal{M}_{n,1:T_n}^* \log\widetilde{\mathcal{M}}_{n,1:T_n}^* + (1 - \mathcal{M}_{n,1:T_n}^*)\log(1 - \widetilde{\mathcal{M}}_{n,1:T_n}^*))|\mathcal{M}_{n,t}^{(k)^*} = 1$$

$$\ldots [9]$$

The loss, $L_m$ is evaluated for sparse matrix values, $\mathcal{M}_{n,t}^{(k)^*} = 1, k \in$ $1, ..., f_{\mathcal{M}}$. $\mathcal{M}^*$or$\widetilde{\mathcal{M}}^* \in \{0,1\}^{[T_n,f_{\mathcal{M}}]}, f_{\mathcal{M}} = \sum_{j=1}^f |l_j|$, $\forall n \in \{1, ..., N\}$. The supercript, * denotes real, $\mathcal{M}\text{train}_{n,1:T_n}$, the sparse conditional vector $c_v$ or synthetic, $\widetilde{\mathcal{M}}\text{train}_{n,1:T_n}$, $\widetilde{\mathcal{M}}_{n,1:T_n}$. $\mathcal{M}\text{train}_{n,1:T_n}$ is the ground-truth one-hot encoded sparse matrix determined for discrete feature variables, $\mathcal{D}\text{train}_{n,1:T_n}^{(c+1:d)}$ by applying the one hot encoding technique. $\widetilde{\mathcal{M}}\text{train}_{n,1:T_n}$ denotes the reconstructed binary sparse matrix. $\beta$ is a hyper parameter.

---

**Algorithm 2** Recovery Module

---

**Require:** $H^*_{n,1:T_n}$, the real or synthetic temporal latent embeddings.

1: **repeat**

2:     **for each** $t \in 1:T_n$ **do**

3:         $\overrightarrow{\mathbf{r}}_{n,t} = \overrightarrow{e}_{\text{rnn}}(H^*_{n,t}, \overrightarrow{\mathbf{r}}_{n,t-1})$

4:         $\mathcal{D}^{(1:c)^*}_{n,t} = \mathbf{S}\left(r^c_f(\overrightarrow{\mathbf{r}}_{n,t})\right)$

5:         $\mathcal{D}^{(c+1:d)^*}_{n,t} = \mathbf{argmax}_{i \in l_j, j \in f}\mathbf{S}_m\left(r^d_f(\overrightarrow{\mathbf{r}}_{n,t})\right)$

6:         $\mathcal{D}^*_{n,t} = \mathcal{D}^{(1:c)^*}_{n,t} \oplus \mathcal{D}^{(c+1:d)^*}_{n,t}$

7:         Encode categorical variables, $\mathcal{D}^{(c+1:d)^*}_{n,t}$ as one-hot vectors, $\tilde{v}^{(j)}_i, j \in \{(c+1), \ldots, d\} \subset f$

8:         $\mathcal{M}^*_{n,t} = \{(\tilde{\mathbf{v}}^{(c+1)}, \ldots, \tilde{\mathbf{v}}^{(d)})\}$

9:     **end for**

10: **until** $n < N, \forall n \in \{1, \ldots, \mathbf{N}\}$

11: **Output:** synthetic data, $\mathcal{D}^*_{n,1:T_n}$ & the sparse dataset, $\mathcal{M}^*_{n,1:T_n}, \forall n \in \{1, \ldots, \mathbf{N}\}$

---

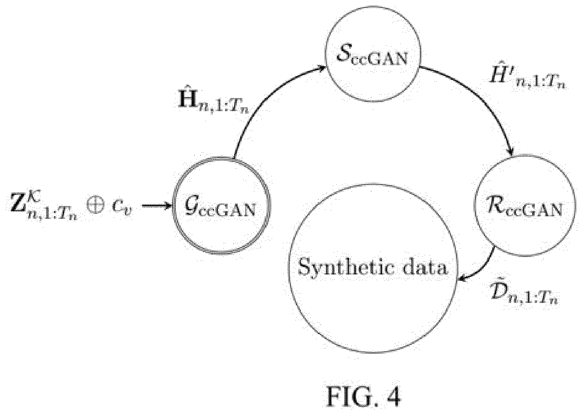

The unsupervised loss is minimized, $\mathcal{L}_{\text{US}}$ through by joint adversarial training of the generator, supervisor and the recovery modules in the unsupervised learning approach as shown in FIG. 4. In absence of pre-assigned labels(ground-truth) as in contrast to supervised learning. The unsupervised learning approach extracts the relationships in the real data through by matching the first and second-order moments of the real, $\mathcal{D}_{\text{train}_{n,1:T_n}}$ and the synthetic data, $\widetilde{\mathcal{D}}_{n,1:T_n}$. Lets say, $\overline{D}_1 = \frac{1}{N}\sum_{j=1}^f \sum_{n=1}^N \mathcal{D}^{(j)}_{\text{train}_{n,1:T_n}}$ and $\overline{D}_2 = \frac{1}{N}\sum_{j=1}^f \sum_{n=1}^N \widetilde{\mathcal{D}}^{(j)}_{n,1:T_n}$ denote the sample means of the real and the synthetic data respectively. Lets assume, $0_1^2 = \frac{1}{N}\sum_{j=1}^f \sum_{n=1}^N (\mathcal{D}^{(j)}_{\text{train}_{n,1:T_n}} - \overline{D}_1)^2$ and $\hat{\sigma}_2^2 = \frac{1}{N}\sum_{j=1}^f \sum_{n=1}^N (\widetilde{\mathcal{D}}^{(j)}_{n,1:T_n} - \overline{D}_2)^2$ denote the sample variances of the real and the synthetic data respectively. The joint adversarial generative moment-matching network comprising of the generator, supervisor, recovery modules aid in unsupervised inference by enforcing the similarity of two distributions, $\mathbb{P}(\mathcal{D}^{(1:c,c+1:d)}_{\text{train}_{n,1:T_n}})$, $\mathbb{P}(\widetilde{\mathcal{D}}^{(1:c,c+1:d)}_{\text{train}_{n,1:T_n}})$ by minimizing the first, $|\overline{D}_1 - \overline{D}_2|$ and second order moments, $|\sqrt{\hat{\sigma}_1^2} - \sqrt{\hat{\sigma}_2^2}|$ differences between the real and the synthetic data as described below,

$$\mathcal{L}_{\text{US}} = |\overline{D}_1 - \overline{D}_2| + |\sqrt{\hat{\sigma}_1^2} - \sqrt{\hat{\sigma}_2^2}| \ \ldots\ldots \ [10]$$

According to an embodiment of the present disclosure, a constraint and condition-aware generator module is configured to incorporate the condition & constraint sampling mechanism into the synthetic data generative neural net. For a finite set of categorical feature variables, $\{(c + 1, \ldots, d)\} \subset f$, k be the categorical label value for $j$-th discrete feature variable in the training dataset, $\mathcal{D}^{(j)}_{\text{train}_{n,t}}$ at $t$-th timepoint corresponding to n-th data sequence. The condition-conscious generator neural net, $\mathcal{G}_{\text{ccGAN}}$ is presented as a sampler for mixed-feature synthetic data, $\widetilde{\mathcal{D}}^{(j)}_{n,t}$ with a prior knowledge given $k$-label value for $j$-th discrete feature attribute at $t$-th timepoint corresponding to the data sequence, n. The condition-

aware generated samples, $\mathcal{G}_{ccGAN}$ satisfy the conditional distribution criteria, $\widehat{\mathbb{P}}(\widetilde{\mathcal{D}}_{n,t}^{(1:c,c+1:d)}|\widetilde{\mathcal{D}}_{n,t}^{(j)} == k)_{,j \in}$

$\{(c + 1, ..., d)\}$, $t \in 1: T_n$ & $\forall n \in \{1, ..., N\}$. $\mathcal{G}_{ccGAN}$ learns the real mixed feature datasetjoint conditional probability distribution as expressed below,

$$\widehat{\mathbb{P}}(\widetilde{\mathcal{D}}_{n,t}^{(1:c,c+1:d)}|\widetilde{\mathcal{D}}_{n,t}^{(j)} = k) = \mathbb{P}(\mathcal{D}_{train_{n,t}}^{(1:c,c+1:d)}|\mathcal{D}_{train_{n,t}}^{(j)} = k) \dots [11]$$

The real temporal data distribution can be described as:

$$\mathbb{P}(\mathcal{D}_{train_{n,t}}^{(1:c,c+1:d)}) = \sum_{k \in l_j} \widehat{\mathbb{P}}(\widetilde{\mathcal{D}}_{n,t}^{(1:c,c+1:d)}|\widetilde{\mathcal{D}}_{n,t}^{(j)} = k)\mathbb{P}(\mathcal{D}_{train_{n,t}}^{(j)} = k) \dots [12]$$

The context-free condition embedded vector, $c_v$ is presented as a mathematical method for incorporating the condition prior knowledge into the Constraint-Conditional Generative Adversarial Network(ccGAN) framework.

Lets assume, $m^{(j)}$ is the mask vector corresponding to j-th categorical feature variable. Note: $|l_j|$ is the cardinality of the set of possible categorical label values, $l_j$ for the j-th discrete feature variable.

$$\{\mathbf{m}^{(j)} \in \{0,1\}^{|l_j|}: \sum_{i=1}^{|l_j|} \mathbf{m}_i^{(j)} = 1\} \dots [13]$$

$\mathbf{m}_i^{(j)}$ denotes the scalar value of 1 in the matching scenario of $i = \mathrm{argmax}_i[l_j^{(i)} = k]$, $k \in l_j$ and the rest is filled with zeros. Note: $l_j^{(i)}$ j denotes the $i$-th element of the set, $l_j$. The conditional vector, $c_v$ is determined by,

$$\{\mathbf{m}^{(1)} \oplus ... \oplus \mathbf{m}^{(d)}\} \dots [14]$$

$c_v$ is derived to operate only on the discrete feature variables for condition-aware synthetic data generation. The sparse conditional vector, $c_v$ during the adversarial training penalizes the generator to output appropriate synthetic latent embeddings. The supervisor neural-net operates on the condition embedded synthetic latent embeddings and predicts one-step ahead synthetic temporal latent embeddings. These high dimensional representations are utilized by the recovery function to output the synthetic data, $\widetilde{\mathcal{D}}_{n,1:T_n}^*$ and the sparse dataset, $\widetilde{\mathcal{M}}_{n,1:T_n}^*$ refer to steps 6, 8 & 11 of the algorithm [2].

Lets assume, $Z_{n,1:T_n} \in \mathcal{R}^{T_n \times f}$ be an f-dimensional uniformly distributed random variable of length, $T_n$ for a sequence, n with values in the half-open interval [0; 1) sampled from an uniform noise, $\mathcal{Z}$. The synthetic noise is refined, $Z_{n,1:T_n}$, $\forall n \in \{1, ..., N\}$ based on the cluster labels, $\mathcal{C}_{train_{n,1:T_n}} \in \mathbb{R}^{T_n}$, $\forall n \in \{1,2, ..., N\}$. The labels are determined by an iterative centroid-based clustering algorithm for assigning a cluster membership to each observation in the unlabeled dataset, $\mathcal{D}_{train_{n,t}}$, $\forall n \in \{1, ..., N\}$, $t \in 1: T_n$. The labels are computed by partitioning, as belonging to one of the $\mathcal{K}$-fixed apriori non-overlapping clusters. The adversarial ground-truth labels, $\mathcal{C}_{train_{n,1:T_n}}$ of the mixed-feature dataset, $\mathcal{D}_{train_{n,1:T_n}}$ are obtained through the unsupervised learning technique.

It is determined by the K-means clustering algorithm as follows:

1. Initialize the cluster centroids randomly, $\mu_1, \mu_2, \ldots, \mu_{\mathcal{K}} \in \mathbb{R}^f$.

2. Repeat until convergence so as to minimize the within-cluster sum of pairwise squared deviations:

$$\{$$

For every n, while $n < N$,

For each n, set

$$\mathcal{C}_{\text{train}_{n,1:T_n}} := \text{argmin}_m \left\{ \left\| \mathcal{D}_{\text{train}_{n,1:T_n}} - \mu_m \right\|^2 \leq ||\mathcal{D}_{\text{train}_{n,1:T_n}} - \mu_p||^2 \right\} \forall m, 1 \leq m, p$$

$$\leq \mathcal{K}$$

For each $m \in \mathcal{K}$, set

$$\mu_m := \frac{\sum_{t=1}^{T_n} 1\{\mathcal{C}_{\text{train}_{n,1:T_n}} = m\} \mathcal{D}_{\text{train}_{n,t}}}{\sum_{t=1}^{T_n} 1\{\mathcal{C}_{\text{train}_{n,1:T_n}} = m\}}$$

$$\}$$

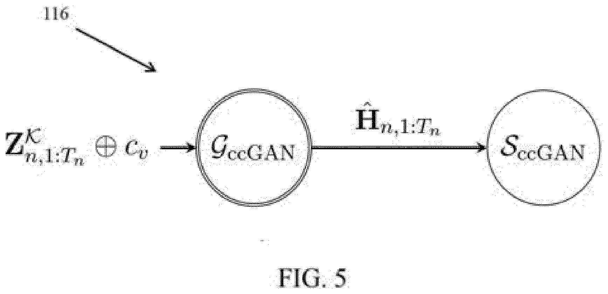

The label embedding, $e^c \in \mathcal{R}^{f'}, \forall c \in \mathcal{K}$, are obtained from the adversarial label embedding matrix, $W \in \mathcal{R}^{\mathcal{K} \times f'}$ based on the corresponding labels, $\mathcal{C}_{\text{train}_{n,1:T_n}}$ to support effective learning. The label embedding matrix, $W$ incorporates the similarities of observations across the feature variables to other observations from the same cluster membership. $f'$ is the characteristic dimension of the embedding matrix, $W$. The label embedding vectors, $e^c$ corresponding to the labels, $\mathcal{C}_{\text{train}_{n,1:T_n}}$ which incorporate the semantics of the real train dataset are concatenated to obtain the label matrix, $\mathcal{L}^c_{n,1:T_n}$ The matrix-matrix product of the cluster-independent noise, $Z_{n,1:T_n}$ and $\mathcal{L}^c_{n,1:T_n}$ is performed to obtain the cluster-dependent noise, $Z^{\mathcal{K}}_{n,1:T_n}$. The generative neural net function refer to the algorithm [3], $\mathcal{G}_{\text{cpGAN}} : Z^{\mathcal{K}}_{n,1:T_n} \oplus c_v \rightarrow \widehat{H}_{n,1:T_n}$ takes as an input the realizations of the cluster-dependent noise, $Z^{\mathcal{K}}_{n,1:T_n}$ concatenated with the conditional vector, $c_v$ and outputs the synthetic latent variables, $\widehat{H}_{n,1:T_n}$ as shown in FIG. 5. $\overrightarrow{g}_{rnm}$ is an autoregressive neural-net model and it is implemented with an unidirectional recurrent neural network with extended memory. $g_f$ is implemented by a feed-forward neural network.

---
**Algorithm 3** Generator Module

---
**Require:** $Z^{\mathcal{K}}_{n,1:T_n}$, the cluster-independent noise

1: **repeat**
2:     **for each** $t \in 1 : T_n$ **do**
3:         $\vec{g}_{n,t} = \vec{g}_{\text{rnn}}(Z^{\mathcal{K}}_{\text{train }n,t} \oplus c_v, \vec{g}_{n,t-1})$
4:         $\hat{H}_{n,t} = \mathbf{S}(g_f(\vec{g}_{n,t}))$
5:     **end for**
6: **until** $n < N, \forall n \in \{1,\dots,\mathbf{N}\}$
7: **Output:** latent embeddings, $\hat{H}_{n,1:T_n}, \forall n \in \{1,\dots,\mathbf{N}\}$

---

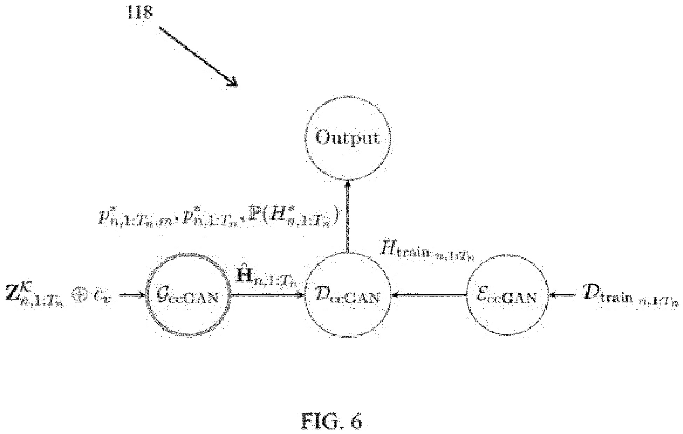

According to an embodiment of the disclosure, a discriminator module is configured to train the discriminator neural network. The objective of the discriminator network, $\mathcal{D}_{\text{ccGAN}}$ DccGan in ccGAN architecture is to distinguish the observed and imputed values in $H^*_{n,1:T_n}$ as shown in FIG. 6. The discriminator net, $\mathcal{D}_{\text{ccGAN}}: H^*_{n,1:T_n} \to p^*_{n,1:T_n,m}, p^*_{n,1:T_n}, \mathbb{P}\left(H^*_{n,1:T_n}\right)$ refer to the algorithm [4] takes as an input the realizations of $H^*_{n,1:T_n}$ and outputs the predicted probability of cluster labels, $p^*_{n,1:T_n,m}$ the predicted probability of adversarial ground-truth, i.e real/synthetic, $p^*_{n,1:T_n}$ the estimated mixed feature joint probability distributions, $\mathbb{P}(H^{(1:c,c+1:d)^*}_{n,1:T_n})$ as described below,

$$p^*_{n,1:T_n,m}, p^*_{n,1:T_n}, \mathbb{P}(H^{(1:c,c+1:d)^*}_{n,1:T_n}) = \mathcal{D}_{\text{ccGAN}}(H^*_{n,1:T_n}) \dots [15]$$

The supercript, * corresponds to real, $p_{\text{train}_{n,1:T_n},m}, p_{\text{train}_{n,1:T_n}}, \mathbb{P}\left(H^{(1:c,c+1:d)}_{\text{train}_{n,1:T_n}}\right)$ or synthetic, $\hat{p}_{n,1:T_n,m}, \hat{p}_{n,1:T_n}, \widehat{\mathbb{P}}(\widehat{H}^{(1:c,c+1:d)}_{n,1:T_n})$. The $\mathcal{G}_{\text{ccGAN}}$ of the ccGAN framework produces synthetic outputs, $\widehat{H}_{n,1:T_n}$ by operating on the random noise, $\mathbf{Z}^{\mathcal{K}}_{n,1:T_n}$, and the discriminator neural net, $D_{\text{ccGAN}}$ by operating on the adversarial learning latent space, $\mathbb{H}$, tries to distinguish latent temporal embeddings, $H_{\text{train}_{n,1:T_n}}$ and $\widehat{H}_{n,1:T_n}$. The binary cross entropy loss for classification of the latent sequences as real or synthetic is described by,

$$\mathcal{L}_{\text{U}} = \frac{1}{N}\sum_{n=1}^{N}\left[-(y_{n,1:T_n}\log(p_{\text{train}_{n,1:T_n}}) + (1 - y_{n,1:T_n})\log(1 - p_{\text{train}_{n,1:T_n}})) + \right.$$
$$\left.(y_{n,1:T_n}\log(\hat{p}_{n,1:T_n}) + (1 - y_{n,1:T_n})\log(1 - \hat{p}_{n,1:T_n}))\right] \dots [16]$$

$y_{n,1:T_n} \in \{0,1\}^{T_n}$ is the adversarial ground-truth, real or synthetic data. $p_{\text{train}_{n,1:T_n}}, \hat{p}_{n,1:T_n} \in [0,1]^{T_n}$ is the predicted probability of class real and $1 - p_{\text{train}_{n,1:T_n}}$ and $1 - \hat{p}_{n,1:T_n}$ is the predicted probability of class synthetic. $\mathcal{D}_{\text{ccGAN}}$ tries to minimize, $\mathcal{L}_{\text{U}}$. The $\mathcal{G}_{\text{ccGAN}}$ tries to maximize, $\mathcal{L}_{\text{U}}$ which helps to learn $\widehat{\mathbb{P}}(\widetilde{\mathcal{D}}^{(1:c,c+1:d)}_{n,1:T_n})$ that

best approximates $\mathbb{P}\left(\mathcal{D}_{\text{train}_{n,1:T_n}}^{(1:c,c+1:d)}\right)$. The prediction of cluster-membership, $\mathcal{C}_{n,1:T_n}^{*} \in \mathcal{K}$ is a multinomial classification task. The $^{*} \in \mathbb{R}^{T_n}$ refers to real or synthetic. For multinomial classification task of cluster-membership prediction, a separate loss is computed for each cluster label per latent sequence, $n$ and at timepoint $t(t \in 1:T_n$. Summation operation of the output over the cluster labels & latent sequences is then performed.

$$\mathcal{L}_{\text{LP}} = \frac{1}{N}[\sum_{m=1}^{\mathcal{K}} \sum_{n=1}^{N} - y_{n,1:T_n}^{c} \log\left(p_{\text{train}_{n,1:T_n,m}}\right) +$$

$$\sum_{m=1}^{\mathcal{K}} \sum_{n=1}^{N} y_{n,1:T_n}^{c} \log(\hat{p}_{n,1:T_n,m})] \dots\dots [17]$$

$\mathcal{K}$ denotes the number of predetermined cluster labels. $y_{n,1:T_n}^{c}$ (ground-truth) denotes the binary value of 1 or 0 if cluster-membership, $m$ is the correct label or incorrect label at timepoint $t(t \in 1: T_n)$ corresponding to latent sequence, $n$. $p_{\text{train}_{n,1:T_n,m}}$ is the predicted probability for real observation at timepoint, $t$ of data sequence, $n$ belongs to cluster, $m$. $\hat{p}_{n,1:T_n,m}$ is the predicted probability for synthetic latent observation at timepoint t of temporal sequence, $n$ belongs to cluster, $m$. The cluster-membership is determined by,

$$\mathcal{C}_{\text{train}_{n,1:T_n}}^{p} := \text{argmax}_m[S_m(p_{\text{train}_{n,1:T_n,m}})], m \in \mathcal{K} \dots\dots [18]$$

$$\hat{\mathcal{C}}_{n,1:T_n} := \text{argmax}_m[S_m(\hat{p}_{n,1:T_n,m})], m \in \mathcal{K} \dots\dots [19]$$

The $\mathcal{D}_{\text{ccGAN}}$ tries to minimize, $\mathcal{L}_{\text{LP}}$ where as $\mathcal{G}_{\text{ccGAN}}$ tries to maximize, $(\mathcal{L}_{\text{LP}})$. $\mathcal{C}_{\text{train}_{n,1:T_n}}^{p}$ denote the predicted cluster labels for real data, $\mathcal{D}_{\text{train}_{n,1:T_n}}$ by the discriminator neural-network architecture in comparison with the ground-truth, $\mathcal{C}_{\text{train}_{n,1:T_n}}$. $\tilde{\mathcal{C}}_{n,1:T_n}$ denote the predicted cluster-membership labels for the synthetic temporal data, $\tilde{\mathcal{D}}_{n,1:T_n}$. The Wasserstein distance between the estimates of two probability distributions $\mathbb{P}(H_{\text{train}_{n,1:T_n}}^{(1:c,c+1:d)})$ and $\widehat{\mathbb{P}}(\widehat{H}_{n,1:T_n}^{(1:c,c+1:d)})$ is also minimized. The Wasserstein loss, $\mathcal{L}_{\text{W}}$ is computed and it is described by,

$$\mathcal{L}_{\text{W}} = \mathcal{W}(\mathbb{P}(H_{\text{train}_{n,1:T_n}}^{(1:c,c+1:d)}), \widehat{\mathbb{P}}(\widehat{H}_{n,1:T_n}^{(1:c,c+1:d)})) \dots [20]$$

$$\mathcal{L}_{\text{W}} = \inf_{\gamma \sim \Pi(P,\hat{P})} \mathbb{E}_{(H_{\text{train}_{n,1:T_n}}, \widehat{H}_{n,1:T_n}) \sim \gamma}[\| \mathbb{P}(H_{\text{train}_{n,1:T_n}}^{(1:c,c+1:d)}) - \widehat{\mathbb{P}}(\widehat{H}_{n,1:T_n}^{(1:c,c+1:d)}) \|] \dots [21]$$

$\gamma \sim \Pi(\mathbb{P}(H_{\text{train}_{n,1:T_n}}^{(1:c,c+1:d)}), \widehat{\mathbb{P}}(\widehat{H}_{n,1:T_n}^{(1:c,c+1:d)}))$ is the set of all possible joint probability distributions between

$\mathbb{P}(H_{\text{train}_{n,1:T_n}}^{(1:c,c+1:d)})$ and $\widehat{P}(\widehat{H}_{n,1:T_n}^{(1:c,c+1:d)})$ . The $\mathcal{D}_{\text{cpGAN}}$ tries to maximize, $\mathcal{L}_W$ where as $\mathcal{G}_{\text{cpGAN}}$ tries to

minimize, $\mathcal{L}_W$ . $\vec{d}_{\text{rnn}}$ is an autoregressive neural-net model and it is implemented with an unidirectional recurrent neural network with extended memory. $d_f$, $d_f^c$ are implemented by a feed-forward neural network.

---

**Algorithm 4** Discriminator Module

**Require:** $H_{n,1:T_n}^*$, the temporal latent embeddings

1: **repeat**
2:     **for each** $t \in 1 : T_n$ **do**
3:         $\vec{d}_{n,t} = \vec{d}_{\text{rnn}}(H_{n,t}^*, \vec{d}_{n,t-1})$
4:         $p_{n,1:T_n}^*, \mathbb{P}(H_{n,1:T_n}^*) = \mathbf{S}(d_f(\vec{d}_{n,t}))$
5:         $p_{n,1:T_n,m}^* = d_f^c(\vec{d}_{n,t})$
6:     **end for**
7: **until** $n < N, \forall n \in \{1,\ldots,\mathbf{N}\}$

---

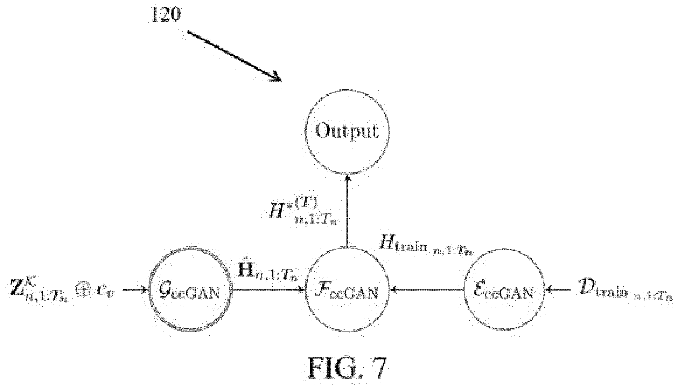

According to an embodiment of the disclosure, the critic Module is configured to train the critic neural network. The critic module, $\mathcal{F}_{\text{ccGAN}} : H_{n,1:T_n}^* \to \mathbb{R}$ , is a neural network model for determining the target variable in predictive analytics task as shown in FIG. 7. Here, * refers to $H_{\text{train}_{n,1:T_n}}^{(1:f-1)}$ or $\widehat{H}_{n,1:T_n}^{(1:f-1)}$ . The critic neural network function takes as an input the realizations of $H_{\text{train}_{n,1:T_n}}^{(1:f-1)}$ or $\widehat{H}_{n,1:T_n}^{(1:f-1)}$ and outputs, $H_{\text{train}_{n,1:T_n}}^{(T)}$ or $\widehat{H}_{n,1:T_n}^{(T)}$ . The features selection includes $\{(1, ..., f - 1)\} \subset f$ as input independent variables to the model. The last feature column in, $H_{n,1:T_n}^{\{(T)\}*}$ denoted by the supersript, $T \subset f$ denotes the target variable to predict. The loss function for the target variable prediction is as follows,

$$\mathcal{L}_F(H_{\text{train}_{n,1:T_n}}, \widehat{H}_{n,1:T_n}) = \sum_{n=1}^{N} \left( \mathcal{F}_{\text{ccGAN}}(H_{\text{train}_{n,1:T_n}}^{(1:f-1)}) - \mathcal{F}_{\text{ccGAN}}(\widehat{H}_{n,1:T_n}^{(1:f-1)}) \right)^2 \ldots [22]$$

The $\mathcal{G}_{\text{ccGAN}}$ tries to minimize, $\mathcal{L}_F$ to preserve the relationship between independent feature variables and the target variable in the real dataset during the adversarial training to output the synthetic data, $\widetilde{\mathcal{D}}_{n,1:T_n}$ . $\vec{c}_{\text{rnn}}$ is an autoregressive neural-net model and it is implemented with an unidirectional recurrent neural network with extended memory. $c_f$ is implemented by a feed-forward neural network.

---

**Algorithm 5** Critic Module

**Require:** $H^*_{n,1:T_n}$, the temporal latent embeddings

1: **repeat**
2:     **for each** $t \in 1:T_n$ **do**
3:         $\vec{c}_{n,t} = \vec{c}_{\text{rnn}}(H^*_{n,t}, \vec{c}_{n,t-1})$
4:         $H^*_{n,t} = \mathbf{S}(c_f(\vec{c}_{n,t}))$
5:     **end for**
6: **until** $n < N, \forall n \in \{1, \ldots, \mathbf{N}\}$

---

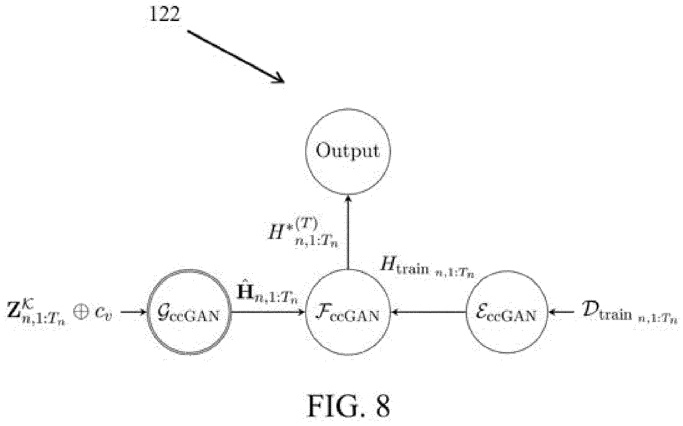

According to ane embodiment of the disclosure, a supervisor module is configured to train the supervisor neural network. The supervisor neural network function,

$$\mathcal{S}_{\text{ccGAN}}$$

is leveraged to retain the conditional temporal dynamics of the original data in the generated synthetic dataset, $\widetilde{\mathcal{D}}_{n,1:T_n}$. $Z^{\mathcal{K}}_{\text{train}_{n,1:T_n}}$ is obtained by transforming random noise sampled from multivariate normal distribution, $Z_{\text{train}_{n,1:T_n}}$ based on the cluster labels, $\mathcal{C}_{\text{train}_{n,1:T_n}}$ as shown in FIG. 8. The $\mathcal{G}_{\text{ccGAN}}$ neural-net of the ccGAN framework takes as input a cluster-membership dependent random noise, $Z^{\mathcal{K}}_{\text{train}_{n,1:T_n}}$ and the condition vector, $c_v$ to generate the synthetic latent variables, $\widehat{H}_{n,1:T_n}$. The auto-regressive sequence module,

$$\mathcal{S}_{\text{ccGAN}} : H^*_{n,1:t-1} \rightarrow$$

$H^*_{n,t}$, $\forall n \in \{1, \ldots, \mathbf{N}\}$, $t \in 1:T_n$ takes as input $H^*_{n,1:t-1}$ and outputs the single-step ahead prediction of the temporal latent variable, $H^*_{n,t}$ conditioned on the past latent sequences. It can be represented as $\mathcal{S}_{\text{cpGAN}} : H^*_{n,1:T_n} \in \prod_t \prod_{j=1}^f \mathbb{H}_{(j)} \rightarrow H'^*_{n,1:T_n} \in \prod_t \prod_{j=1}^f \mathbb{H}_{(j)}$. The ccGAN framework effectively captures the temporal dynamics of the true data by minimizing the supervised loss,

$$\mathcal{L}_S = [\textstyle\sum_{n=1}^N \sum_t \| H_{\text{train}_{n,t}} - \mathcal{S}_{\text{ccGAN}}(H^*_{n,1:t-1}) \|_2] \quad \ldots \ldots [23]$$

The $\mathcal{G}_{\text{ccGAN}}$ during the adversarial training in the closed-loop receives as input the ground-truth, $H_{\text{train}_{n,1:T_n}}$ from $\mathcal{E}_{\text{ccGAN}}$ & minimizes $\mathcal{L}_S$ by forcing the $\widehat{H}'_{n,1:T_n}$ assessed by the inaccurate adversary $(\mathcal{D}_{\text{ccGAN}})$ to preserve the single-step transitions of the $H_{\text{train}_{n,1:T_n}}$. $\vec{s}_{\text{rnn}}$ is an autoregressive neural-net model and it is implemented with an unidirectional recurrent neural network with extended memory. $s_f$ is implemented by a feed-forward neural network.

---

**Algorithm 6** Supervisor Module

**Require:** $H^*_{n,1:T_n}$, the temporal latent embeddings

1: **repeat**
2:     **for each** $t \in 1 : T_n$ **do**
3:         $\vec{s}_{n,t} = \vec{s}_{rnn}(H^*_{n,t}, \vec{s}_{n,t-1})$
4:         $H'^*_{n,t} = \mathbf{S}\big(s_f(\vec{s}_{n,t})\big)$
5:     **end for**
6: **until** $n < N, \forall n \in \{1, \ldots, \mathbf{N}\}$

---

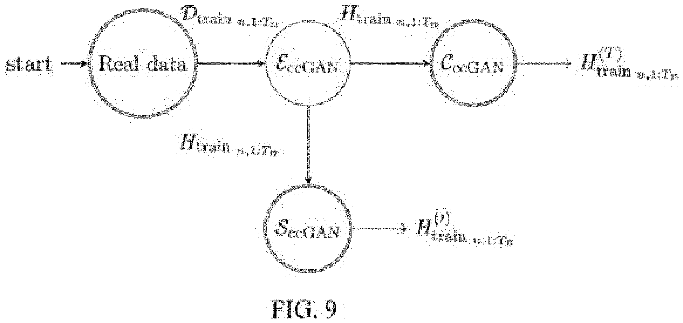

According to an embodiment of the disclosure, the ccGAN algorithm is trained as follows as shown in FIG. 9. At first, the embedding neural network $(\mathcal{E}_{ccGAN})$ and the recovery network $(\mathcal{R}_{ccGAN})$ are trained jointly on the reconstruction of the real temporal data, $\mathcal{D}_{train_{n,1:T_n}}$ with an objective to learn a higher-dimensional representation (feature encoding) from the lower-dimensional mixed-feature dataset, $\mathcal{D}_{train_{n,1:T_n}}$. In the beginning, the supervisor network

$$(\mathcal{S}_{ccGAN})$$

is trained in the supervisedlearning approach on the single-step ahead prediction task of the real latent variable, $H_{train_{n,1:T_n}}$ by operating in the latent space, $\mathbb{H}$. The critic network $(\mathcal{F}_{ccGAN})$ is trained initially on the real data to map the independent feature variables to the target variable by minimizing the prediction loss, $\mathcal{L}_F$. Here, the objective is to minimize, $\min_{\Phi_e,\Phi_r,\Phi_s,\Phi_c}(\mathcal{L}_R + \beta\mathcal{L}_M + \mathcal{L}_S + \mathcal{L}_F)\, \mathcal{D}_{train_{n,1:T_n}}$ in supervised learning approach by operating on the lower-dimensional mixedfeature dataset, $\mathcal{D}_{train_{n,1:T_n}}$ to extract characteristics of the real data. $\beta$ is the hyper-parameter of the learning algorithm. In the present disclosure, $\beta = 100$. $\Phi_e$, $\Phi_r$, $\Phi_s$, $\Phi_c$ denote the learnable-parameters of the embedding, the recovery, the supervisor and the critic modules respectively. Let $\theta_g$, $\theta_d$ denote the learnable parameters of the $\mathcal{G}_{ccGAN}$, $\mathcal{D}_{ccGAN}$ neural network functions. $\mathcal{G}_{ccGAN}$ is trained by seven distinct loss functions $\mathcal{L}_{US}$, $\mathcal{L}_U$, $\mathcal{L}_W$, $\mathcal{L}_M$, $\mathcal{L}_S$, $\mathcal{L}_F$ and $\mathcal{L}_{LP}$. $\mathcal{G}_{ccGAN}$ is trained adversarially to minimize the weighted sum of the above loss functions,

$$\mathcal{L}_G = \min_{\theta_g}(\alpha((-\mathcal{L}_U) + \gamma(\mathcal{L}_W) + (-\mathcal{L}_{LP})) + \mathcal{L}_{US} + \beta\mathcal{L}_M + \mathcal{L}_S + \mathcal{L}_F) \ \ldots .. \ [24]$$

Here, $\alpha \in \mathbb{R}^+$. In an example, $\alpha = 100$ and $\gamma = 10$. $\mathcal{D}_{ccGAN}$ is trained by three distinct loss functions $\mathcal{L}_U$, $\mathcal{L}_W$, and $\mathcal{L}_{LP}$. $\mathcal{D}_{ccGAN}$ is trained to minimize the weighted sum of the loss functions,

$$\mathcal{L}_D = \min_{\theta_d}(\alpha((\mathcal{L}_U) + \gamma(-\mathcal{L}_W) + (\mathcal{L}_{LP}))) \ \ldots\ldots\ldots\ldots \ [25]$$

$\mathcal{G}_{ccGAN}$, $\mathcal{D}_{ccGAN}$ are trained adversarially by deceptive input as follows,

$$\min_{\mathcal{G}_{\text{ccGAN}}} \max_{\mathcal{D}_{\text{ccGAN}}} \mathcal{L}(\mathcal{G}_{\text{ccGAN}}, \mathcal{D}_{\text{ccGAN}})$$ . It can be expressed as,

$$\min_{\theta_g} [\alpha((-\mathcal{L}_U) + \gamma(\mathcal{L}_W) + (-\mathcal{L}_{\text{LP}})) + \mathcal{L}_{\text{US}} + \beta\mathcal{L}_M + \mathcal{L}_S + \mathcal{L}_F +$$

$$\max_{\theta_d} (\alpha((-\mathcal{L}_U) + \gamma(\mathcal{L}_W) + (-\mathcal{L}_{\text{LP}})))] \quad \ldots\ldots\ldots\ldots \quad [26]$$

After training $\mathcal{G}_n$ of the ccGAN architecture on $\mathcal{D}_{\text{train}_{n,1:T_n}}$ . The performance of the algorithm is evaluated and reported on $\mathcal{D}_{\text{test}_{n,1:T_n}}$ . $\widetilde{\mathcal{D}}_{n,1:T_n}$ is determined independently by sampling sequences using $\mathcal{G}_n$ .

According to an embodiment of the disclosure, the system 100 is also explained with the help of experimental data. Two datasets were taken for testing,

- ETT (Electricity Transformer Temperature): The ETT datasets contain hourlyrecorded 2-year data from two separate stations (ETTh1, ETTh2)[25]. Each dataset contains 2 years * 365 days * 24 hours = 17,520 data points and each datapoint consist of six power load 145 features in KW and a target value oil temperature (°C). The train/validation/test splits are (60/20/20%).
- C-MAPS S RUL: It is a NASA aircraft turbofan engine dataset (FD001-FD004) for Remaining Useful Life (RUL) prediction, generated from C-MAPSS engine simulation. It contains a historical time series data of 24 features (21 sensors and three operating conditions). The dataset has a pre-defined train and test split. The training dataset is further split into 80/20% for train/validation.

**Target Variable Prediction on Multivariate Time Series Industrial Data**

Here, the benefits of synthetic data are demonstrated. The ETT dataset is composed of continuous variables. The ccGAN algorithmic architecture is trained by the real training dataset. The validation dataset is utilized for hyperparameter tuning and for tuned model selection. The synthetic data is sampled from the ccGAN framework. The LSTM neural-network architecture acts as a baseline model trained by the real training dataset for target oil temperature (°C) prediction. The LSTM* is a target prediction model trained jointly with the real training and the sampled synthetic dataset. The performance of both the models were evaluated on the real Holdout or the test dataset. It is report, in Table 2 a 25.66% & 13.06% drop in prediction error(RMSE) on ETTh$_1$ and ETTh$_2$ test datasets respectively.

**Target Variable Prediction on Multivariate, Mixed Data Type Industrial Data**

Across all the NASA aircraft turbofan engine datasets, FD001-FD004. The ccGAN algorithmic architecture is trained by leveraging the corresponding training datasets. The validation dataset is utilized for hyper-parameter tuning & drives the model selection to avoid over-fitting of the ccGAN architecture. The GRU neural-net architecture is trained jointly with the real training dataset and the sampled multivariate, mixed data type synthetic dataset for the prediction of remaining useful life (RUL) of turbofan engines. The performance of the model is evaluated on the real Holdout dataset for comparison with the literature. It was observed that the RUL prediction model outperformed all other baseline models across all the datasets. The synthetic dataset has learned key-dominant patterns across the real training dataset. It is well-generalized and resulted in better performance of the prediction model on the real Holdout set.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure herein address unresolved problem of synthetic data generation with accuracy and multiple variables. The embodiment thus provides a method and a system for generating mixed variable type multivariate temporal synthetic data. A data augmentation framework is provided to generate condition and constraint knowledge-conscious mixed-data type multivariate time-series synthetic industrial data to aid in downstream target prediction tasks. In general, the condition & constraint incorporated synthetic data generation of industrial-plant or equipment-level sensory information by the conservation laws guided generative adversarial neural network architectures could better serve as virtual simulations of capturing process or equipment level data underneath probability distributions and aid in prognostics and health management of industrial assets.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g. any kind of computer like a server or a personal computer, or the like, or any combination thereof. The device may also include means which could be e.g. hardware means like e.g. an applicationspecific integrated circuit (ASIC), a field-programmable gate array (FPGA), or a combination of hardware and software means, e.g. an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g. using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computerusable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method for generating mixed variable type multivariate temporal synthetic data, the method comprising:

providing, via one or more hardware processors, mixed variable type multivariate temporal real time data as an input data, wherein the mixed variable type comprises continuous variables and discrete variables (202);
pre-processing, via the one or more hardware processors, the input data by scaling to a fixed range for both the continuous variables and the discrete variables (204);
splitting, via the one or more hardware processors, the pre-processed data into a training dataset, a validation dataset and a test dataset (206);
training, via the one or more hardware processors, a joint neural network of an autoencoding-decoding component of a Constraint-Condition-Generative Adversarial Network (ccGAN), a supervisor neural network and a critic neural network utilizing the training dataset, wherein the autoencoding-decoding component comprises an embedding neural network and a recovery neural network (208), the training comprises:

providing the training dataset as an input to the embedding neural network to generate high dimensional real latent temporal embeddings (208a),

providing the high dimensional real latent temporal embeddings as an input to the recovery neural network to get a reconstructed input training dataset, wherein the embedding and the recovery neural network is jointly trained using a supervised learning approach for reconstructing the training dataset (208b),

providing the high dimensional real latent temporal embeddings as an input to the supervisor neural network to generate a single-step-ahead high dimensional real latent temporal embeddings, wherein the supervisor neural network is trained using the supervised learning approach (208c), and

providing the high dimensional real latent temporal embeddings as an input to the critic neural network to predict a target variable, wherein the critic neural network is trained using the supervised learning approach (208d);

determining, via the one or more hardware processors, a cluster label dependent random noise by transforming a Gaussian random noise with fixed predetermined cluster labels, wherein the Gaussian random noise is part of the input data (210);

computing, via the one or more hardware processors, a conditioned knowledge vector corresponding to a pre-determined label value for each discrete variable (212);

concatenating, via the one or more hardware processors, the cluster label dependent random noise with the conditioned knowledge vector to generate a condition aware synthetic noise (214);

jointly training, via the one or more hardware processors, adversarial neural networks of the Constraint-Condition aware Generative Adversarial Network (ccGAN), a sequence generator neural network, a sequence discriminator neural network, the supervisor neural network and the critic neural network utilizing the condition aware synthetic noise (216), wherein the training comprises:

providing a condition aware synthetic noise as an input to the sequence generator neural network to get high dimensional synthetic latent temporal embeddings (216a),

providing the high dimensional synthetic latent temporal embeddings to the trained supervisor neural network to predict single-step ahead synthetic temporal latent embeddings (216b),

providing the high dimensional synthetic latent temporal embeddings to the trained critic neural network to predict the synthetic target variable (216c), and

providing the predicted single-step ahead synthetic temporal latent embeddings as an input to the recovery neural network to generate the mixed variable type multivariate temporal synthetic data (216d);

providing, via the one or more hardware processors, the high dimensional real latent temporal embeddings and the high dimensional synthetic latent temporal embeddings as an input to the sequence discriminator neural network to classify them as one of a real or a fake, and predict cluster labels for synthetic data (218);

providing, via the one or more hardware processors, a real world condition aware synthetic noise as an input to the trained sequence generator neural network to get real world high dimensional synthetic latent temporal embeddings (220);

providing, via the one or more hardware processors, the real world high dimensional synthetic latent temporal embeddings to the trained supervisor neural network to predict real world single-step ahead synthetic temporal latent embeddings (222); and

providing, via the one or more hardware processors, the real world predicted single-step ahead synthetic temporal latent embeddings as an input to the trained recovery neural network to generate the mixed variable type multivariate temporal synthetic data (224).

2. The processor implemented method of claim 1 further configured to minimize the discrepancy between the real input temporal data and the mixed variable type multivariate temporal synthetic data using the embedding neural network and the recovery neural network modules.

3. The processor implemented method of claim 1, wherein a conditioned knowledge vector is configured to incorporate the condition into the Constraint-Conditional Generative Adversarial Network (ccGAN) framework.

4. The processor implemented method of claim 1 further comprising providing the validation dataset as an input to the trained ccGAN to tune a set of hyperparameters.

5. A system (100) for generating mixed variable type multivariate temporal synthetic data, the system comprises:

an input/output interface (104);

one or more hardware processors (108); and

a memory (110) in communication with the one or more hardware processors, wherein the one or more first hardware processors are configured to execute programmed instructions stored in the one or more first memories, to:

provide mixed variable type multivariate temporal real time data as an input data, wherein the mixed variable type comprises continuous variables and discrete variables;

pre-process the input data by scaling to a fixed range for both the continuous variables and the discrete variables;

split the pre-processed data into a training dataset, a validation dataset and a test dataset;

train a joint neural network of an autoencoding-decoding component of a Constraint-Condition-Generative Adversarial Network (ccGAN), a supervisor neural network and a critic neural network utilizing the training dataset, wherein the autoencoding-decoding component comprises an embedding neural network and a recovery neural network, the training comprises:

providing the training dataset as an input to the embedding neural network to generate high dimensional real latent temporal embeddings,

providing the high dimensional real latent temporal embeddings as an input to the recovery neural network to get a reconstructed input training dataset, wherein the embedding and the recovery neural network is jointly trained using a supervised learning approach for reconstructing the training dataset,

providing the high dimensional real latent temporal embeddings as an input to the supervisor neural network to generate a single-step-ahead high dimensional real latent temporal embeddings, wherein the supervisor neural network is trained using the supervised learning approach, and

providing the high dimensional real latent temporal embeddings as an input to the critic neural network to predict a target variable, wherein the critic neural network is trained using the supervised learning approach;

determine a cluster label dependent random noise by transforming Gaussian random noise with a fixed predetermined cluster labels, wherein the Gaussian random noise is part of the input data;

compute a conditioned knowledge vector corresponding to a pre-determined label value for each discrete variable;

concatenate the cluster label dependent random noise with the conditioned knowledge vector to generate a condition aware synthetic noise;

jointly train adversarial neural networks of the Constraint-Condition aware Generative Adversarial Network (ccGAN), a sequence generator neural network, a sequence discriminator neural network, the supervisor neural network and the critic neural network utilizing the condition aware synthetic noise, wherein the training comprises:

providing the condition aware synthetic noise as an input to the sequence generator neural network to get high dimensional synthetic latent temporal embeddings,

providing the high dimensional synthetic latent temporal embeddings to the trained supervisor neural network to predict single-step ahead synthetic temporal latent embeddings,

providing the high dimensional synthetic latent temporal embeddings to the trained critic neural network to predict the synthetic target variable, and

providing the predicted single-step ahead synthetic temporal latent embeddings as an input to the recovery neural network to generate the mixed variable type multivariate temporal synthetic data;

provide the high dimensional real latent temporal embeddings and the high dimensional synthetic latent temporal embeddings as input to the sequence discriminator neural network to classify them as one of a real or a fake, and predict the cluster labels for synthetic data;

provide a real world condition aware synthetic noise as an input to the trained sequence generator neural network to get real world high dimensional synthetic latent temporal embeddings;

provide the real world high dimensional synthetic latent temporal embeddings to the trained supervisor neural network to predict real world single-step ahead synthetic temporal latent embeddings; and

provide the real world predicted single-step ahead synthetic temporal latent embeddings as an input to the trained recovery neural network to generate the mixed variable type multivariate temporal synthetic data.

6. The system of claim 1 further configured to minimize the discrepancy between the real input temporal data and the mixed variable type multivariate temporal synthetic data using the embedding neural network and the recovery neural network modules.

7. The system of claim 1, wherein a conditioned knowledge vector is configured to incorporate the condition into the Constraint-Conditional Generative Adversarial Network (ccGAN) framework.

8. The system of claim 1 further comprising providing the validation dataset as an input to the trained ccGAN to tune a set of hyperparameters.

9. One or more non-transitory machine-readable information storage mediums comprising one or more instructions which when executed by one or more hardware processors cause:

providing, mixed variable type multivariate temporal real time data as an input data, wherein the mixed variable type comprises continuous variables and discrete variables;
pre-processing, via the one or more hardware processors, the input data by scaling to a fixed range for both the continuous variables and the discrete variables;
splitting, via the one or more hardware processors, the pre-processed data into a training dataset, a validation dataset and a test dataset;
training, via the one or more hardware processors, a joint neural network of an autoencoding-decoding component of a Constraint-Condition-Generative Adversarial Network (ccGAN), a supervisor neural network and a critic neural network utilizing the training dataset, wherein the autoencoding-decoding component comprises an embedding neural network and a recovery neural network, the training comprises:

providing the training dataset as an input to the embedding neural network to generate high dimensional real latent temporal embeddings,
providing the high dimensional real latent temporal embeddings as an input to the recovery neural network to get a reconstructed input training dataset, wherein the embedding and the recovery neural network is jointly trained using a supervised learning approach for reconstructing the training dataset,
providing the high dimensional real latent temporal embeddings as an input to the supervisor neural network to generate a single-step-ahead high dimensional real latent temporal embeddings, wherein the supervisor neural network is trained using the supervised learning approach, and
providing the high dimensional real latent temporal embeddings as an input to the critic neural network to predict a target variable, wherein the critic neural network is trained using the supervised learning approach;

determining, via the one or more hardware processors, a cluster label dependent random noise by transforming a Gaussian random noise with fixed predetermined cluster labels, wherein the Gaussian random noise is part of the input data;
computing, via the one or more hardware processors, a conditioned knowledge vector corresponding to a predetermined label value for each discrete variable;
concatenating, via the one or more hardware processors, the cluster label dependent random noise with the conditioned knowledge vector to generate a condition aware synthetic noise;
jointly training, via the one or more hardware processors, adversarial neural networks of the Constraint-Condition aware Generative Adversarial Network (ccGAN), a sequence generator neural network, a sequence discriminator neural network, the supervisor neural network and the critic neural network utilizing the condition aware synthetic noise, wherein the training comprises:

providing a condition aware synthetic noise as an input to the sequence generator neural network to get high dimensional synthetic latent temporal embeddings,
providing the high dimensional synthetic latent temporal embeddings to the trained supervisor neural network to predict single-step ahead synthetic temporal latent embeddings,
providing the high dimensional synthetic latent temporal embeddings to the trained critic neural network to predict the synthetic target variable, and
providing the predicted single-step ahead synthetic temporal latent embeddings as an input to the recovery neural network to generate the mixed variable type multivariate temporal synthetic data;

providing, via the one or more hardware processors, the high dimensional real latent temporal embeddings and the high dimensional synthetic latent temporal embeddings as an input to the sequence discriminator neural network to classify them as one of a real or a fake, and predict cluster labels for synthetic data;

providing, via the one or more hardware processors, a real world condition aware synthetic noise as an input to the trained sequence generator neural network to get real world high dimensional synthetic latent temporal embeddings;

providing, via the one or more hardware processors, the real world high dimensional synthetic latent temporal embeddings to the trained supervisor neural network to predict real world single-step ahead synthetic temporal latent embeddings; and

providing, via the one or more hardware processors, the real world predicted single-step ahead synthetic temporal latent embeddings as an input to the trained recovery neural network to generate the mixed variable type multivariate temporal synthetic data.

108

100

104-1

102

Embedding and
recovery module 114

Generator module
116

110

Discriminator module
118

106

Critic module 120

104-2

Supervisor module
122

104-N

112

FIG. 1

200

Provide mixed variable type multivariate temporal real time data as an input data, wherein the mixed variable type comprises continuous variables and discrete variables — 202

Preprocess the input data by scaling to a fixed range using a min-max scaling technique for both the continuous variables and discrete variables — 204

Split the pre-processed data into a training dataset, a validation dataset and a test dataset — 206

Train a joint neural network of an autoencoding-decoding component of a Constraint-Condition-Generative Adversarial Network (ccGAN), a supervisor neural network and a critic neural network utilizing the training dataset, wherein the autoencoding-decoding component comprises an embedding neural network and a recovery neural network — 208

Provide training dataset as an input to embedding neural network to generate high-dimensional real latent temporal embeddings — 208a

Provide high dimensional real latent temporal embeddings as an input to the recovery neural network to get a reconstructed input training dataset — 208b

Provide high-dimensional real latent temporal embeddings as an input to supervisor neural network to generate a single-step-ahead high-dimensional real latent temporal embeddings — 208c

(A)

FIG. 2A

200

(A)

Provide the high-dimensional real latent temporal embeddings as an input to the critic neural network to predict a target variable — 208d

Determine a cluster label dependent random noise by transforming Gaussian random noise with a fixed predetermined cluster labels, wherein the Gaussian random noise is part of the input data — 210

Compute a conditioned knowledge vector corresponding to a pre-determined label value for each discrete variable — 212

Concatenate the cluster label dependent random noise with the conditioned knowledge vector to generate a condition aware synthetic noise — 214

Jointly train adversarial neural networks of the ccGAN, a sequence generator neural network, a sequence discriminator neural network, the supervisor neural network and the critic neural network utilizing the condition aware synthetic noise — 216

Provide condition aware synthetic noise as an input to the sequence generator neural network to get high dimensional synthetic latent temporal embeddings — 216a

Provide the high dimensional synthetic latent temporal embeddings to the trained supervisor neural network to predict single-step ahead synthetic temporal latent embeddings — 216b

(B)

FIG. 2B

200

(B)

| Provide the high dimensional synthetic latent temporal embeddings to the trained critic neural network to predict the synthetic target variable | 216c |

| Provide the predicted single-step ahead synthetic temporal latent embeddings as an input to the recovery neural network to generate the mixed variable type multivariate temporal synthetic data | 216d |

| Provide high dimensional real latent temporal embeddings and the high dimensional synthetic latent temporal embeddings as an input to sequence discriminator neural network to classify them as one of a real or a fake, and predict the cluster labels for synthetic data | 218 |

| Provide a real world condition aware synthetic noise as an input to the trained sequence generator neural network to get real world high dimensional synthetic latent temporal embeddings | 220 |

| Provide the real world high dimensional synthetic latent temporal embeddings to the trained supervisor neural network to predict real world single-step ahead synthetic temporal latent embeddings | 222 |

| Provide the real world predicted single-step ahead synthetic temporal latent embeddings as input to the trained recovery neural network to generate the mixed variable type multivariate temporal synthetic data | 224 |

FIG. 2C

114

$$\mathcal{D}\text{train}_{n,1:T_n}$$

$$\mathcal{E}_{\text{ccGAN}}$$

$$H\text{train}_{n,1:T_n}$$

start → Real data

Synthetic data

$$\mathcal{R}_{\text{ccGAN}}$$

$$\tilde{\mathcal{D}}_{train_{n,1:T_n}}$$

FIG. 3

FIG. 4

116

$$\mathbf{Z}^{\mathcal{K}}_{n,1:T_n} \oplus c_v \longrightarrow \mathcal{G}_{\mathrm{ccGAN}} \xrightarrow{\hat{\mathbf{H}}_{n,1:T_n}} \mathcal{S}_{\mathrm{ccGAN}}$$

FIG. 5

118

$$p^*_{n,1:T_n,m}, p^*_{n,1:T_n}, \mathbb{P}(H^*_{n,1:T_n})$$

$$\mathbf{Z}^{\mathcal{K}}_{n,1:T_n} \oplus c_v \rightarrow \mathcal{G}_{ccGAN} \xrightarrow{\hat{\mathbf{H}}_{n,1:T_n}} \mathcal{D}_{ccGAN} \xleftarrow{H_{\text{train}_{n,1:T_n}}} \mathcal{E}_{ccGAN} \leftarrow \mathcal{D}_{\text{train}_{n,1:T_n}}$$

FIG. 6

120

$$\mathbf{Z}^{\mathcal{K}}_{n,1:T_n} \oplus c_v \rightarrow \mathcal{G}_{\mathrm{ccGAN}} \xrightarrow{\hat{\mathbf{H}}_{n,1:T_n}} \mathcal{F}_{\mathrm{ccGAN}} \leftarrow \mathcal{E}_{\mathrm{ccGAN}} \leftarrow \mathcal{D}_{\mathrm{train}\,n,1:T_n}$$

$$H^{*(T)}_{n,1:T_n}$$

$$H_{\mathrm{train}\,n,1:T_n}$$

Output

FIG. 7

33

122

Output

$H^{*(T)}_{n,1:T_n}$

$H_{\text{train }n,1:T_n}$

$\mathbf{Z}^{\mathcal{K}}_{n,1:T_n} \oplus c_v \longrightarrow \mathcal{G}_{\text{ccGAN}}$  $\xrightarrow{\hat{\mathbf{H}}_{n,1:T_n}}$  $\mathcal{F}_{\text{ccGAN}} \longleftarrow \mathcal{E}_{\text{ccGAN}} \longleftarrow \mathcal{D}_{\text{train }n,1:T_n}$

# FIG. 8

FIG. 9

Europäisches
Patentamt

European
Patent Office

Office européen
des brevets

# EUROPEAN SEARCH REPORT

Application Number

EP 22 20 8966

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | AMIRSINA TORFI ET AL: "Differentially Private Synthetic Medical Data Generation using Convolutional GANs", ARXIV.ORG, CORNELL UNIVERSITY LIBRARY, 201 OLIN LIBRARY CORNELL UNIVERSITY ITHACA, NY 14853, 22 December 2020 (2020-12-22), XP091000555, DOI: 10.1016/J.INS.2021.12.018 * abstract; figure 1 * * page 3, column 2, line 28 – line 45 * * page 5, column 1, line 1 – column 2, line 21 * * page 6, column 1, line 28 – line 30 * * page 7, column 1, line 13 – page 8, column 1, line 12 * * page 9, column 2, line 29 – line 45 * ----- | 1-9 | INV. G06N3/0455 G06N3/047 G06N3/0475 G06N3/09 G06N3/088 |
| A | LEI XU ET AL: "Synthesizing Tabular Data using Generative Adversarial Networks", ARXIV.ORG, CORNELL UNIVERSITY LIBRARY, 201 OLIN LIBRARY CORNELL UNIVERSITY ITHACA, NY 14853, 27 November 2018 (2018-11-27), XP081041863, * abstract; figures 1-6 * * page 1, line 1 – line 10 * * page 3, line 1 – page 5, line 26 * * page 8, line 1 – page 9, line 3 * ----- | 1-9 | TECHNICAL FIELDS SEARCHED (IPC) G06N |

The present search report has been drawn up for all claims

| Place of search | Date of completion of the search | Examiner |
|---|---|---|
| The Hague | 1 May 2023 | Rousset, Antoine |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202221000662